# EUROPEAN PATENT SPECIFICATION

(11) **EP 3 423 340 B1**
(45) Date of publication and mention of the grant of the patent: **01.04.2020**
(21) Application number: 17707343.4
(22) Date of filing: 28.02.2017
(51) Int. Cl.: B62M 6/45, B62M 6/55

(54) **ONE-WAY CLUTCH FOR ELECTRICALLY POWERED BICYCLE WITH COASTER BRAKE**
EINWEGKUPPLUNG FÜR ELEKTRISCH ANGETRIEBENES FAHRRAD MIT RÜCKTRITTBREMSE
EMBRAYAGE UNIDIRECTIONNEL POUR BICYCLETTE ÉLECTRIQUE AVEC FREIN DE MONTÉE

(30) Priority: 29.02.2016 EP 16157842
(43) Date of publication of application: 09.01.2019
(73) Proprietor: Pro-Movec A/S, 8240 Risskov (DK)
(72) Inventor: RASMUSSEN, Jan, 8420 Rønde (DK)
(74) Representative: Budde Schou A/S
(86) International application number: PCT/EP2017/054645
(87) International publication number: WO 2017/148946

(56) References cited:
- EP-A1- 1 462 355
- EP-A1- 2 384 962
- EP-A2- 2 380 806
- DE-B3-102005 013 865
- US-A1- 2003 159 869
- US-A1- 2015 038 289

## Description

The present invention relates to a one-way clutch for connecting and disconnecting an electric center motor to and from a drive of an electrically powered bicycle with a coaster brake. The invention further relates to an electrically powered bicycle with a coaster brake with such a one-way clutch, and to a method of connecting and disconnecting an electric center motor to and from a drive of an electrically powered bicycle with a coaster brake, using a one-way clutch.

### Background of the invention

Increasingly, bicycles are equipped with electric motors. Electrical motors may be coupled to the pedal crank or the rear axle of a bicycle. Typically, the electric motor is arranged to aid pedaling. Therefore, many electrical motor equipped bicycles are configured such that the motor kicks in, when the bicyclist rotates the pedals in one (forward) direction and is uncoupled, when the bicyclist stops pedaling, or treads to provide a counter rotation of the pedals in order to brake the bicycle. Braking by counter rotating the pedals is common in many types of bicycles, both regular and electrically driven, and is known as a 'coaster brake'. A 'coaster brake' is also known as a 'back pedal brake' or 'foot brake'. Many electric bicycles are driven by a center motor, which is connected to the pedal drive at the front/main sprocket/chain ring within the pedal crank. However, an electrical center motor may be arranged in other positions on the frame of a bicycle, and the rotation be transferred to the main sprocket via suitable transfer means.

It is a problem with the prior art clutches for the type of electrically driven bicycles with a center motor and a coaster brake/foot brake that, when the counter rotation of the pedals is begun, the inertia of the electric motor gives a "kick-back". This gives a very unpleasant feeling for the bicyclist experiencing the kick-back, and the phenomenon may cause dangerous situations if the bicyclist is startled by the kick-back. Therefore, it is desirable that kick back is completely avoided, or at least reduced.

An example of a clutch system for coupling an electrical motor in and out of engagement with a pedal drive is disclosed in EP 2 384 962 A1. EP 2 384 962 A1 discloses a "back pedal gear". The gear or transmission has a helical screw drive attached between a foot pedal connection shaft and a drive connection element. It comprises a guide in form of a helical section with constant or variable pitch. A coupling element switchably connects a motor connection shaft with the drive connection element, and is connected with the screw drive in an axial force-transmitting manner. The coupling element separates the motor connection shaft from the drive connection element during negative torsional movement between the foot pedal connection shaft and the connection element. EP 2 384 962 A1 also concerns a method for controlling coupling of a drive and a motor of an electric bicycle.

The coupling provided in EP 2 384 962 A1 provides a displacement in an axial direction of the crank arm and sprocket when shifting between forward and backwards rotation of the pedaling. This results in a spacious solution, which in itself is inconvenient. Further, an axial movement of the crank arm, and thereby one of the pedals, provides an uncomfortable feeling for the bicyclist/user.

The coupling provided in EP 2 384 962 A1 is also of a very complex structure, which takes up a lot of space, and which is difficult to service and maintain. Further, the complex structure does not allow retrofitting.

Another example of coupling an electric motor to a bicycle drive is shown in US 7,370,720 B2. Also, this coupling is very intricate and space consuming, expensive to manufacture and to service/maintain. Further, the entire solution is so specialized that the crank section of the bicycle needs to be specially manufactured, which does not allow retrofitting.

US 2015/0038289 A1 discloses a one-way clutch for a one-way clutch for connecting and disconnecting an electric motor to and from a drive of an electrically powered bicycle with a coaster brake. This one-way clutch does not address the problem of kick-back from the electric motor. The one-way clutch includes a ratchet mechanism with a ratchet pawl running over teeth, and journaled to rotate between two positions. The ratchet pawl needs to be biased by a spring, in order to work. Furthermore, the disclosed solution involves a very complex form/shape of the ratchet pawl, which needs to have three separate engagement portions in various parallel planes in order to work and extending along three perpendicular axes. This results in a very complex mechanism, which is very susceptible to strain, wear and damages, and thus forms an unreliable solution. Further the ratchet pawl running over the teeth will be very noisy, an increase the wear and tear on the parts, not least the ratchet pawl, which will be influenced by constant oscillations, when not engaged. Further, there are no indications in US 2015/0038289 A1 that the one-way clutch prevents kick-back. Further, In all embodiments US 2015/0038289 A1 describes that several one-way clutches are needed.

The present invention provides a solution that overcomes the problems of the prior art. The present invention allows for coupling the sprocket and the motor when forward pedaling is provided by the bicyclist. Thereby the electrical center motor aids the propulsion. When there is no trot in the pedals, the motor and the sprocket are automatically and immediately uncoupled, such that no kick-back can be transferred to the pedal crank arm when the pedals motion is completely reversed to apply the brake. The inventive clutch is provided between the sprocket and the electric motor, whereby it becomes independent of motor-type, and further becomes applicable for retrofitting.

### Disclosure of the invention

In view of these objects, in a first aspect (which is specified in claim 1), the invention relates to a one-way clutch for connecting and disconnecting an electric center motor to and from a drive of an electrically powered bicycle with a coaster brake, the drive comprising
- a drive shaft having a longitudinal axis
- a sprocket arranged coaxially with the drive shaft;
- a crank arm arranged on the drive shaft; and
- an endless chain arranged over the sprocket,
wherein the one-way clutch comprises
- a sprocket member for transferring rotation from the one-way clutch to the sprocket;
- a crank arm disc for transferring rotation from the crank arm to the sprocket;
- a drive disc for transferring rotation from the electric center motor to the sprocket, the drive disc being rotatable relative to the crank arm disc and the sprocket member;
- at least one displacement member journaled in a bearing through a portion of the sprocket member;
- a first cavity formed in a portion of the crank arm disc, and configured to receive and engage a first portion of the displacement member; and
- a plurality of second cavities formed in a portion of the drive disc, and configured to receive and engage a second portion of the displacement member,
wherein the at least one displacement member is linearly slideably relative to the bearing between
- a first position, where a first portion of the displacement member is received in and engages a first cavity, and where the displacement member is disengaged from any one of the second cavities; and
- a second position, where a second portion of the displacement member is received in and engages one of the second cavities, and where the displacement member is disengaged from the first cavity.

Thereby, a very simple, durable an easily serviceable one-way clutch is provided. The one-way clutch further avoids or minimizes the problem of kick-back, experienced by a user/bicyclist.

In an embodiment at least one first cavity is formed as an indentation in a surface of a portion of said crank arm disc, and configured to receive and engage a first portion of said displacement member; and the a plurality of second cavities are formed as indentations in a surface of a portion of the drive disc, and configured to receive and engage a second portion of said displacement member; and the one-way clutch further comprises first inter-cavity surface portions formed adjacent to and between the first cavities, and second inter-cavity surface portions formed adjacent to and between the second cavities.

According to the above mentioned first aspect of the invention, a forward rotation of said crank arm disc relative to said sprocket member pushes the at least one displacement member out of said at least one first cavity and into engagement with a second cavity, where it is kept in place by the a first inter-cavity surface portion while the forward rotation of the crank arm disc is maintained, and where a backwards rotation of the crank arm disc displaces the at least first cavity into alignment with a bearing a second inter-cavity portion pushes the at least one the displacement member into said first cavity.

In one embodiment, the first cavity is shaped such that the displacement member is forced out of engagement with the first cavity and displaced toward engagement with the second cavity, when the crank arm is rotated in a first direction.

Additionally or alternatively, in a further embodiment the second cavity may be shaped such that the displacement member is forced out of engagement with the second cavity and toward engagement with the first cavity when the crank arm is rotated in a second direction opposite to the first direction.

In an embodiment, the at least one displacement member is displaceable from the at least one first cavity by a ledge, forming a transition from a straight bottom surface portion of the at least one first cavity and a surface of the crank arm disc in which the at least one first cavity is formed.

In a further embodiment, the crank arm disc is rotatable relative to the sprocket member in a limited angle only. Thereby, a very simple and efficient way of providing braking is provided. The limited rotation may be provided by at least one protrusion on one of the sprocket member or the crank arm disc, and the at least one protrusion is configured for cooperating with at least one slit provided in the other of the sprocket member or the crank arm disc.

In further embodiments, the sprocket member, the crank arm disc, the drive disc, and the displacement member of the one-way clutch may in addition to any of the previously mentioned embodiments form an exchangeable entity, where the sprocket member comprises means for rotation-fast connection to the sprocket, where the crank arm disc comprises means for rotation-fast connection to the crank arm, and wherein the drive disc comprises means for connecting to a drive output of the electric center motor.

In one embodiment, the displacement member is slideable in an axial direction parallel to the axis of the drive shaft. In connection with this embodiment, the at least one bearing may be formed through the sprocket member, the at least one first cavity may be formed in an axially inwardly facing surface of the crank arm disc, and the second plurality of cavities may be formed in an axially outwardly facing surface of the drive disc.

In further embodiments, alternative to the above-mentioned embodiments, where the displacement member is slideable in an axial direction, the displacement member may be slideable in a radial direction perpendicular to the axis of the drive shaft. In further embodiments thereof, the at least one bearing is formed through the drive disc, the at least one first cavity is formed in a radially outwardly facing surface of a ring-shaped crank flange of the crank arm member, and the plurality of second cavities may be formed in a radially inwardly facing surface of the crank arm member.

Thereby a particularly durable one-way clutch is provided.

In connection with any of the previously mentioned embodiment, there may be one first cavity for every one displacement member and every one bearing.

In preferred embodiments, a sensor may further be arranged in the one way clutch, where the sensor is configured for turning on the electric center motor, when a forward rotation of the crank arm is detected by the sensor, and for turning off the electric center motor, when no rotation or a backwards rotation of the crank arm is detected by the sensor.

In an embodiment, the sensor is arranged in connection with a rotation limiting mechanism between the sprocket member and the crank arm disc.

The objects of the invention may - in a second aspect of the invention (which is specified in claim 12) -further be achieved by an electrically powered bicycle with a coaster brake and a one-way clutch of the type specified in claim 1.

In an embodiment at least one first cavity is formed as an indentation in a surface of a portion of said crank arm disc, and configured to receive and engage a first portion of said displacement member; and the a plurality of second cavities are formed as indentations in a surface of a portion of the drive disc, and configured to receive and engage a second portion of said displacement member; and the one-way clutch further comprises first inter-cavity surface portions formed adjacent to and between the first cavities, and second inter-cavity surface portions formed adjacent to and between the second cavities.

Thus, a forward rotation of said crank arm disc relative to said sprocket member pushes the at least one displacement member out of said at least one first cavity and into engagement with a second cavity, where it is kept in place by the a first inter-cavity surface portion while the forward rotation of the crank arm disc is maintained, and where a backwards rotation of the crank arm disc displaces the at least first cavity into alignment with a bearing a second inter-cavity portion pushes the at least one the displacement member into said first cavity.

In embodiments of the second aspect of the invention, a sensor may be arranged in connection with the drive of the electrically powered bicycle. The sensor is configured for turning on the electric center motor when a forward rotation of the crank arm is detected by the sensor, and for turning off the electric center motor when no rotation or a backwards rotation of the crank arm is detected by the sensor.

The sensor may be a torque or strain gauge sensor. The sensor may be provided between parts of the drive e.g. the drive shaft and the crank arm. Alternatively, the sensor may be provided on a single part, such as the crank arm or the drive shaft. In an embodiment, the sensor may be provided in the one-way clutch.

Regardless of the position of the sensor, the sensor is preferably connected to communicate with an electronic control unit or the electric motor, in order to transfer a signal indicative of a rotation of the crank arm/pedals, i.e. pedaling by a user/bicyclist.

In embodiments of this second aspect of the invention, the electrically powered bicycle may comprise any of the further features of the embodiments mentioned in connection with the one-way valve according to the first aspect of the invention, described above.

The objects of the invention may - in a third aspect of the invention (which is specified in claim 14) -further be achieved by a method of connecting and disconnecting an electric center motor to and from engagement with a drive of an electrically powered bicycle with a coaster brake by a one-way clutch, the drive comprising
- a drive shaft having a longitudinal axis;
- a sprocket arranged coaxially with the drive shaft;
- a crank arm arranged on the drive shaft; and
- an endless chain arranged overs the sprocket,
wherein the one-way clutch comprises
- a sprocket member for transferring rotation from the one-way clutch to the sprocket;
- a crank arm disc for transferring rotation from the crank arm to the sprocket;
- a drive disc for transferring rotation from the electric center motor to the sprocket, the drive disc being rotatable relative to the crank arm disc and the sprocket member;
- at least one displacement member journaled in a bearing through a portion of either the sprocket member or the drive disc;
- a first cavity formed in a portion of the crank arm disc, and configured to receive and engage a first portion of the displacement member; and
- a plurality of second cavities configured to receive and engage a second portion of the displacement member,
wherein the plurality of second cavities is formed in the opposite of the sprocket member or the drive disc wherein the at least one bearing is formed, and
wherein the method comprises linearly sliding the at least one displacement member relative to the bearing, between
- a first position, where a first portion of the displacement member is received in and engages the first cavity, and where the displacement member is disengaged from any of the second cavities to disconnect the electric motor from the drive; and
- a second position, where a second portion of the displacement member is received in and engages one of the second cavities, and where the displacement member is disengaged from the first cavity to connect the electric center motor to the drive.

In an embodiment at least one first cavity is formed as an indentation in a surface of a portion of said crank arm disc, and configured to receive and engage a first portion of said displacement member; and the a plurality of second cavities are formed as indentations in a surface of a portion of the drive disc, and configured to receive and engage a second portion of said displacement member; and the one-way clutch further comprises first inter-cavity surface portions formed adjacent to and between the first cavities, and second inter-cavity surface portions formed adjacent to and between the second cavities.

According to the mentioned third aspect of the invention, a forward rotation of said crank arm disc relative to said sprocket member pushes the at least one displacement member out of said at least one first cavity and into engagement with a second cavity, where it is kept in place by the a first inter-cavity surface portion while the forward rotation of the crank arm disc is maintained, and where a backwards rotation of the crank arm disc displaces the at least first cavity into alignment with a bearing a second inter-cavity portion pushes the at least one the displacement member into said first cavity.

In embodiments of this third aspect of the invention, the method of connecting and disconnecting an electric center motor to and from engagement with a drive of an electrically powered bicycle may comprise any of the further features of the embodiments mentioned in connection with the one-way valve according to the first aspect of the invention or the bicycle according to the second aspect of the invention, described above. In further embodiments thereof, the features of the embodiments mentioned in connection with the one-way valve according to the first aspect of the invention, described above may be used in steps of the method according to the third aspect of the invention. In the context of this application the term "displacement member bearing" is simply referred to as "bearing" or "first bearing" and in the detailed description referring to the drawings, the item thus called "displacement member bearing", "bearing" or "first bearing", is indicated by the reference number 70.

Further objects, features, advantages and properties of the one-way clutch, the electrically powered bicycle, and the method according to the present invention will become apparent from the detailed description below.

### Brief description of the drawings

The invention will now be explained in more detail by means of examples of embodiments with reference to the schematic drawing, in which
Fig. 1, in a side view, shows an electrically powered bicycle;
Fig. 2, in a perspective view, shows an electric motor for an electrically powered bicycle, along with a sprocket, a crank arm, and a one way coupling according to the invention;
Figs. 3A-F, in a partly sectional top view, shows components of a drive system with an embodiment of a one-way clutch according to the invention in various stages. The section corresponds to section AA' in Fig. 4;
Fig. 4 shows a crank arm with a crank arm disc for a one-way clutch according to an embodiment of the invention;
Fig. 5, in a side view, shows a crank arm, a drive disc, and a sprocket of the one-way clutch according to an embodiment of the invention, as seen from the frame side of a bicycle;
Fig. 6A, in an exploded perspective view, shows elements of a one-way clutch according to another embodiment;
Fig. 6B, in an exploded perspective view, shows the same elements of a one-way clutch as in Fig. 6A, but from a different angle;
Fig. 7, in a horizontal sectional view, shows elements of the Figs. 6A-B embodiment in an assembled state;
Figs. 8A-C, in a partially sectional view, shows the inter-relative positions of the elements of the Figs. 6A-B embodiment, in various stages of forward pedaling and braking;
Fig. 9A, in a perspective view, shows a further embodiment of a one-way clutch formed as an independent unit, and in an assembled state, which may be mountable to couple an electric motor to a drive of a bicycle;
Fig. 9B, in a perspective view, shows the one-way clutch of Fig 9A, from the opposite side relative to the view in Fig. 9A;
Fig. 10A, in an exploded perspective view, shows elements of the one-way clutch in Figs. 9A-B together with parts/elements of a bicycle drive, and from the same side as shown in Fig. 9A;
Fig. 10B, in an exploded perspective view, shows the same elements of a one-way clutch as in Figs. 10, but from a different angle (same side as Fig. 9B);
Fig. 11A, in a sectional side view, shows a section through the assembled one-way clutch in Figs. 9A-B, along the section A-A, shown in Fig. 11B;
Fig. 11B shows a top view of the one-way clutch in Figs. 9A-B;
Fig. 11C shows a side view of the one-way clutch in Figs. 9A-B and 11B;
Fig. 11D shows a horizontal section D-D through one-way clutch in Fig. 11A;
Figs. 12A-B, in perspective views, shows details of a sprocket member of a one-way clutch as shown in Figs. 9-11;
Figs. 13A-B, in perspective views, shows details of a crank arm disc of a one-way clutch as shown in Figs. 9-11; and
Figs. 14A-B, in perspective views, shows details of a drive disc of a one-way clutch as shown in Figs. 9-11.

### Detailed description of embodiments of the invention

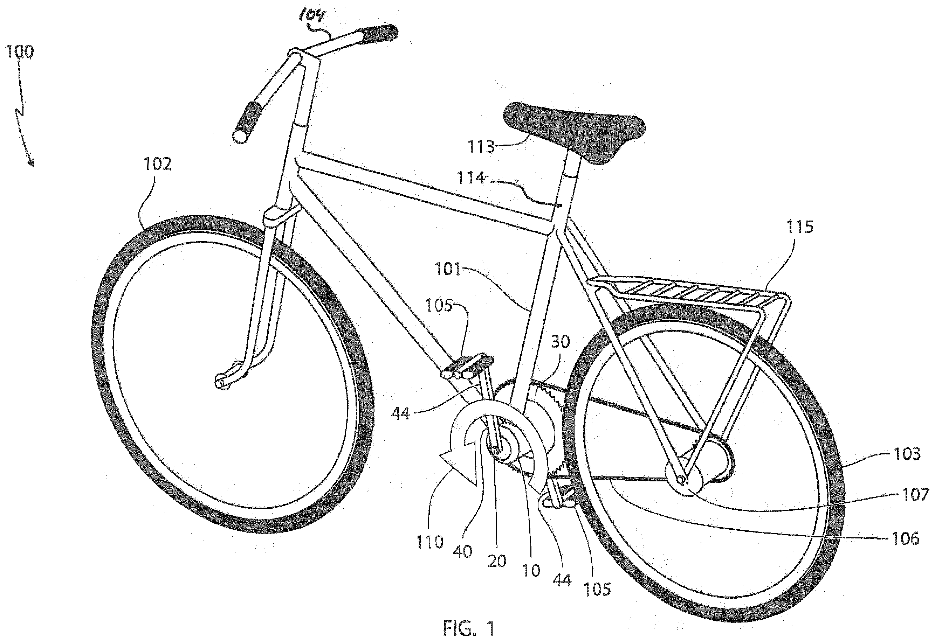

Fig. 1 shows an electrically powered bicycle 100. The electrically powered bicycle comprises a frame 101, a front wheel 102, a rear wheel 103, a handle bar 104, and a main sprocket 30 arranged in connection with a crank arm 40, equipped with pedals 105, arranged for propelling the bicycle my a bicycle user, i.e. a bicyclist.

The electrically powered bicycle comprises a drive, the drive comprising a drive shaft 20 having a longitudinal axis, A (not shown in Fig. 1), a sprocket 30 arranged coaxially with the drive shaft 20, a crank arm 40 arranged on the drive shaft 20, and an endless chain 106 arranged over said main sprocket 30.

The drive shaft 20 is rotatably supported in a lower central portion of the frame 101, and a left and a right end of the drive shaft 20 are fitted with pedals 105 via crank arms 40. This drive shaft 20 is coaxially fitted with the main sprocket 30 via a one-way clutch 1 (not shown in Fig. 1; see further details below) for transmitting the revolution of the crank arms 40 and main sprocket 30 exclusively in the direction indicated by the arrow 110 in Fig. 1, corresponding to the forward driving direction of the bicycle.

The main sprocket (herein after denoted sprocket 30) is - via an endless chain 106 - mounted on a drive shaft 20, and connected to a rear sprocket 107, arranged at a hub of the rear wheel 103.

By a trot in the pedals 105 by the bicyclist, the crank arm 40, the sprocket 30 and the drive shaft 20 may be forced to rotate in the direction of the arrow 110. Thereby power is transferred via the chain 106 to the rear sprocket 107, and consequently to the rear wheel 103. Thereby, the bicycle may be propelled forward (in Fig. 1 this is toward the left in the figure).

The electrically powered bicycle is of the type having a coaster brake. A coaster brake is a type of drum brake integrated into the back hub with an internal freewheel. Thereby the electrically powered bicycle has a freewheeling function as with other systems, where - when back pedaled - the brake engages after a fraction of a revolution. Coaster brakes can be found in both single-speed and internally geared hubs.

The electrically powered bicycle 100 further comprises an electric motor 10. The electric motor 10 shown in Fig. 1 is a center motor.

An electric center motor 10 in electrically powered bicycles is a motor that engages the main sprocket, which is also connected to the crank arm (pedal crank arm) of the bicycle. The electric center motor 10 thereby may aid a bicyclist in propelling the bicycle.

In the embodiment shown in Fig. 1, the electrical motor 10 is arranged in a crank box of the bicycle. However, in other embodiments, the electrical motor 10 may be arranged in a different position relative to the frame 101 of the bicycle (not shown), and the rotation of the electrical motor 10 may be transferred to the main sprocket via a suitable transfer mechanism, such as sprockets, chains, belts or similar (not shown) via the one way clutch as described further below.

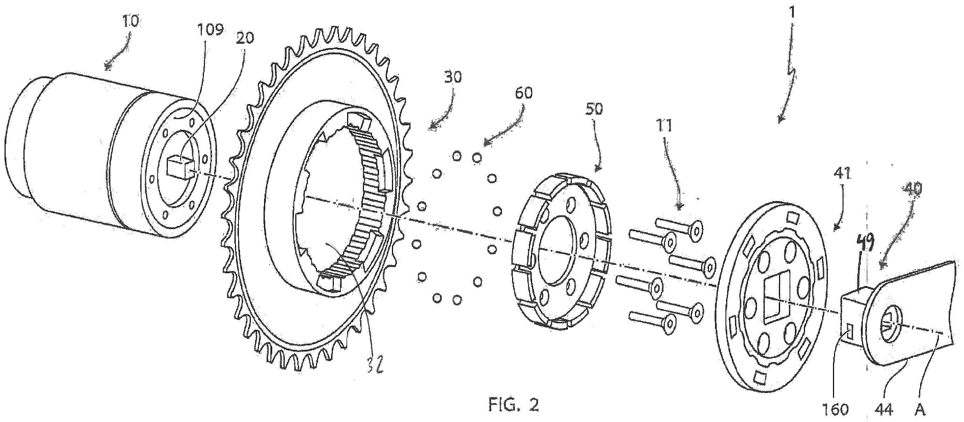

In any case, the electric center motor 10 comprises a drive output 109, which is connectable to the crank arm 40 via the one way clutch 1. In Fig. 2 a drive output 109 is shown in connection with an electric center motor 10.

The electrically powered bicycle further may comprise a power source in the form of a battery (not shown) for the electric motor 10. The battery may be removably attached to the electrically powered bicycle 100 at a suitable location. For example, the battery may be attached to a seat post 114 under a saddle 113, or on or under a rear luggage carrier 115.

The electrically powered bicycle 100 of the illustrated embodiment may be provided with a control for assisting the pedal effort at an assist ratio (assisting power/pedal effort) that is determined from at least a bicycle running speed and the pedal effort. The control system of the electrically powered bicycle 100 preferably comprises a microcomputer (not shown), which provides a control of the electronic processes of the bicycle, especially the electric motor 10.

The microcomputer may receive as input signals at least a revolving speed signal from a sensor 160 arranged in connection with a drive of the bicycle 100, e.g. on a drive shaft 20, a crank arm 40 or in the one-way clutch 1, for calculating a running speed and strain gauge signals used for calculating the pedal effort. Means for generating those input signals are known in the art and will not be described in further details. The microcomputer calculates the running speed and the pedal effort from those input signals and executes the electronic processing for determining the assist ratio based on a predetermined algorithm. Subsequently, the microcomputer sequentially outputs pulse signals to provide an instruction to the electric motor 10 to generate the assisting power in association with the determined assist ratio.

It is known in the art to include a sensor suitable for detecting when force is applied by a user/bicyclist to the pedals. Such a sensor may for example be a torque sensor. When a force is applied to the pedals 105, and torque is thereby induced in the crank arm 40 and the sprocket 30, the sensor senses the torque or the motion, and sends a signal to the microprocessor, which subsequently sends a control signal to the electrical motor 10 in order to activate the electric motor 10. Alternatively, the sensor sends a start signal directly to the electric motor 10.

When, the bicyclist stops applying force to the pedals 105 (stops trotting), or reverses the rotation in order to engage the coaster brake, the sensor or sensors sense the lack of forward torque or motion, and/or senses a rearward torque or motion, and sends a stop signal to the microprocessor, which in turn switches off the electrical motor. Alternatively, the sensor sends a signal to the electric motor 10, which will turn off the electric motor 10.

The description of the sensor function immediately above applies to prior art electrically powered bicycles, but similar sensors and sensor functions are utilized in connection with the one-way coupling according to the present invention. In the prior art systems, it is a problem that the control system is not capable of switching off the electrical motor quickly enough. Even a slight delay may cause the bicyclist to experience the feeling of a "kick back". The one way coupling according to the present invention, at least overcomes this problem.

In the present invention, the sensor 160 (see Fig. 2) may be arranged in connection with the drive of the electrically powered bicycle, e.g. on a drive shaft 20, a crank arm 40, or it may be arranged in the one-way clutch 1. The sensor 160 is configured for turning on the electric center motor 10, when a forward rotation 110 of the crank arm 40 is detected by the sensor 160, and for turning off the electric center motor 10, when no rotation or a backwards rotation 120 of the crank arm 40 is detected by the sensor 160.

The sensor 160 may be a torque or strain gauge sensor. The sensor 160 may be provided between parts of the drive e.g. the drive shaft 20 and the crank arm 40. Alternatively, the sensor 160 may be provided on a single part, such as the crank arm 40 or the drive shaft 20. In another embodiment, the sensor 160 may be provided in the one-way clutch 1.

Regardless of the position of the sensor, the sensor 160 is preferably connected to communicate with an electronic control unit or the electric motor 10, in order to transfer a signal indicative of a rotation of the crank arm 40/pedals 105, i.e. pedaling by a user/bicyclist. The connection may be through suitable wires or wirelessly via suitable wireless technology.

Fig. 2 shows a one-way clutch 1 arranged between a motor 10 with a drive output 109, a sprocket 30 and a crank arm 40. The one way clutch 1 according to the invention may have constituent parts being part of the drive output 109, the sprocket 30 or the crank arm 40, or the one-way clutch may form a unit, which may be mounted to couple the drive output 109, the sprocket 30 and the crank arm 40 together. The one way clutch 1 shown in Fig. 1 is just an exemplary one-way clutch, and may take on the form of any of the embodiments, described in the following.

In the following, various embodiments of the one way clutch 1 according to the invention is described in further detail.

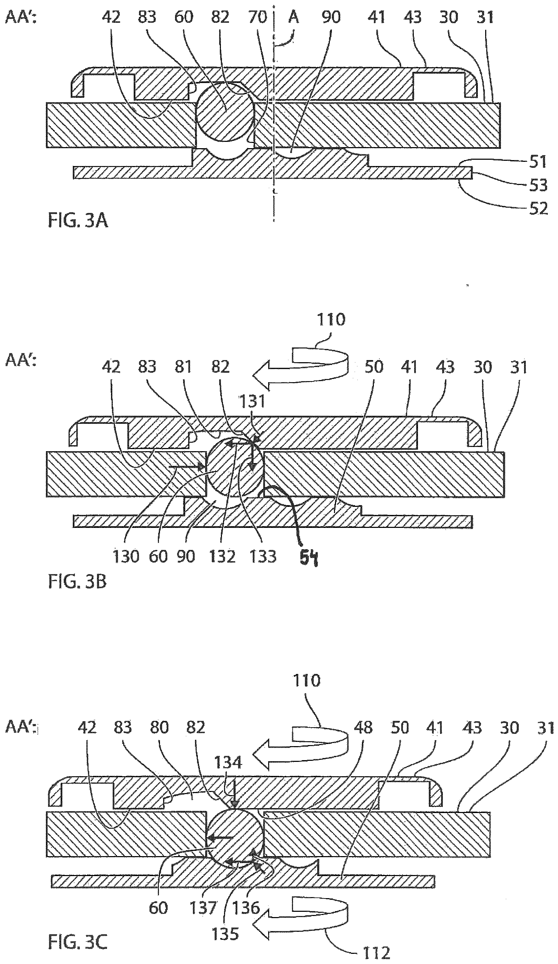

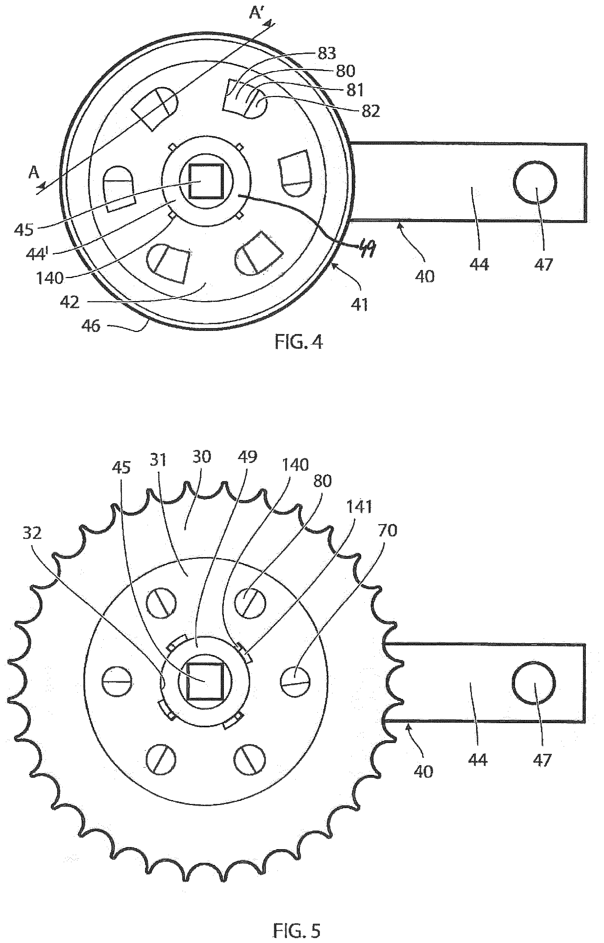

Figs. 3A-F, in a horizontal partial section, show the one-way clutch 1 in a first embodiment, and in various positions. For simplicity, Figs. 3A-F show only the most important constituent parts. The section shown in Figs. 3A-F is the section AA' shown in Fig. 4.

Fig. 3A shows the embodiment of the one-way clutch in a neutral position, where the bicyclist is not applying a force in the pedals 105, and therefore not inducing any rotation in the crank arm 40.

The one-way clutch 1 only allows the electric motor 10 to apply forward rotation of the sprocket 30, when the crank arm 40 is rotated in the forward direction by the user/bicyclist. If the user/bicyclist stops rotating the pedals and drive shaft in the forward direction, the electric motor 10 is decoupled.

Figs. 3A-F show a drive disc 50, which may be the same element as the drive output 109, or form an independent part, which may be mounted thereto. Figs. 3A-F further show a portion of a sprocket 30, and a portion of a crank arm 40 with a crank arm disc 41.

The portion of the sprocket 30 shown in the Figs. 3A-F may form an integral part of the sprocket, or preferably, as shown in e.g. Fig. 5, the shown portion of the sprocket 30 is a sprocket member 31 on which the sprocket 30 is mounted in rotation fast manner, such that the sprocket member 31 and the sprocket 30 is prevented from rotating relative to one another. In the latter case, the sprocket member 31 may form part of a replaceable unit or assembly forming the one-way clutch 1. The sprocket 30 and the sprocket member 31 may be rotation-fast connected relative to each other in a number of ways, e.g. by press fit, mechanical fasteners like screws or pals, or via corresponding shapes of a central aperture (not shown) of the sprocket 30 and the outer surface of the sprocket member 31.

The crank arm 40 comprises a crank arm disc 41 and crank arm shaft 44 (see Fig. 4), the crank arm shaft 44 connecting the crank arm disc with the pedals 105. The crank arm shaft 44 may be formed integral with the crank arm disc 41, or preferably, the crank arm shaft 44 and the crank arm disc 41 may be formed as two separate connectable components, that may be connected in a rotation fast manner relative to each other. Thereby, the crank arm disc 41 may form part of a unit or assembly forming the one-way clutch 1.

The crank arm 40 and the crank arm disc 41 are mountable on the drive shaft 20 (which for simplicity is not shown in Figs. 3A-F) in a rotation fast manner relative to each other, and in such a way that a rotation of the crank arm 40 and the crank arm disc 41 (relative to the frame 101) will cause a rotation of the drive shaft 20.

The sprocket 30 and sprocket member 31 is mounted coaxially around the drive shaft 20 (not shown), such that the sprocket member 31 and sprocket 30 is freely rotatable relative to the drive shaft 20, and coaxially with and adjacent to the crank arm disc 41.

However, the rotation of the sprocket 30 and the sprocket member 31 relative to the adjacent crank arm disc 41 (and thereby the crank arm 40), is limited, such that the relative rotation between the sprocket 30 and the crank arm disc 41 is only a few degrees, such as 5-30°, as described a little further below with reference to Fig. 5.

In Figs. 3A-F, further, the drive disc 50 is mounted coaxially with and around the drive shaft 20 (not shown), such that the drive disc 50 is freely rotatable relative to the drive shaft 20, and coaxially with and adjacent to the sprocket 30. Thus, in this embodiment, the sprocket 30 can be said to be sandwiched between the sprocket 30 and the crank arm disc 41 in the axial direction, A. The drive disc 50 may be coupled to the sprocket 30 and to the crank arm disc 41, and decoupled therefrom, as further described in the following.

As further shown in Figs. 3A-F, at least one hole/aperture may be formed in and through the sprocket 30, the hole/aperture forming a displacement member bearing 70 configured for slideably guiding a displacement member 60. For simplicity, in the following, the displacement member bearing 70 is referred to as "bearing" or "first bearing". It is clear that the clutch 1 may comprise further bearings between rotatable parts. In the context of this application, such other bearings will be separately named.

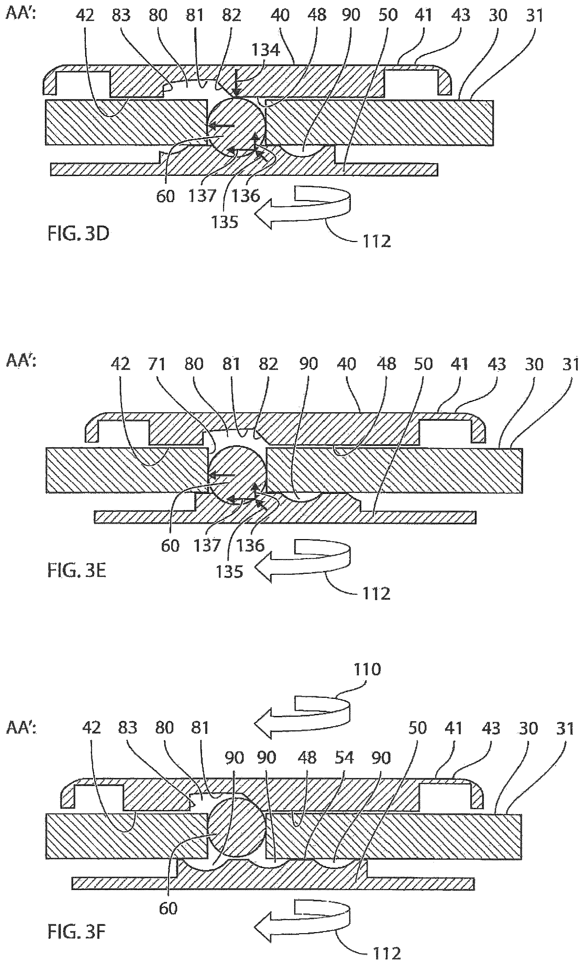

In the embodiment shown in Figs. 3-5, the displacement member 60, in the form of spherical object, such a solid steel ball, is arranged snugly in the bearing 70, and displaceable in the axial direction parallel to the longitudinal axis A of the drive shaft 20.

In other embodiments (not shown), and dependent on the thickness (in the axial direction, A) of the sprocket 30 and/or the sprocket member 31, the displacement member 60 may take the form of an elongate object, such as a cylinder with semi-spherical ends, or more generally, the elongate object may have any cross-sectional shape, as long as the ends are rounded, or at least configured to cooperate with the shapes of a set of engagement sockets as described in the following.

Fig. 4, in a perspective view, shows a crank arm 40 similar to the crank arm 40, shown in Figs. 3A-F, the crank arm 40 comprising a crank arm disc 41 and a crank arm shaft 44. The crank arm disc 41 has an inner side 42, which when mounted in the one-way clutch 1, as shown in e.g. Figs. 3A-F, faces the sprocket 30. The crank arm disc 41 further has an opposite outer side 43 (visible in Figs. 3A-F). A crank arm shaft 44 is coupled to the outer side 43.

At least one engagement socket in the form of a first cavity 80 or indentation is formed in the inner side/surface 42 of the crank arm disc 41.

In Fig. 4, the crank arm 40 is shown from a view, where the inner side/surface 42 of the crank arm disc 41 is visible. The outer side 43 of the crank arm disc 41 thus cannot be seen. However, from Fig. 4, it will be appreciated, that the crank arm shaft 44 extends in a radial direction on the outer side 43 in a plane parallel to the crank arm disc 41, and connected on the outer side/surface 43.

Fig. 4 also shows a center bore 45 for receiving the drive shaft 20 (not shown in Fig. 4), the center bore 45 being formed in a radially inner end of the crank arm 40. The center bore 45 extends through the radially innermost part of the crank arm shaft 44, a drive shaft connection member 49 of which is shown in Fig. 4. The center bore 45 has a square cross section, such that it can be mounted on the drive shaft 20 in a rotation fast manner, by the drive shaft having a corresponding square cross-sectional shape. In other embodiments other corresponding cross-sectional shapes of the drive shaft 20 and center bore 45 may be utilized.

In embodiments, where the crank arm disc 41 forms part of a replaceable one way clutch unit/assembly, the crank arm disc 41 preferably also has a central bore 45', which may be attached to a drive shaft connection member 49. The central bore 45' allows the coaxial mounting of the crank arm disc 41 around the drive shaft connection member 49. The central bore 45' of the crank arm disc 41 may have a shape corresponding to the outer shape of the drive shaft connection member 49 in order to allow a rotation-fast connection thereto.

Fig. 4 further shows that six first cavities 80 or indentations are formed in the inner side/surface 42. In other embodiments (not shown), another number of first indentations may be used, such as 1-5 or 7-10. As mentioned above, at least one first cavity 80 is arranged in the crank arm disc 41. The first cavities 80 are formed in a circle at a radial distance away from the axis A of the crank arm disc (as defined through the middle of the center hole 45, and coinciding with the longitudinal axis A, of the drive shaft 20 when the crank arm disc 41 is mounted thereon).

Preferably, the one or more first cavities 80 is/are formed in the vicinity of the outer circumferential rim 46 of the crank arm disc 41. Preferably, the one or more first cavities 80 is/are formed at a distance of an outer 1/3 of the distance (radius) from the central axis A to the circumferential rim 46.

A hole 47 for mounting a (not shown) pedal 105 further is shown in Fig. 4.

The at least one first cavity 80 is shaped and sized to receive a portion of the displacement member 60. The shape of the first cavity/cavities 80 is described in further detail below.

The number of first cavities 80 in the crank arm disc 41 matches the number of bearings 70 in the sprocket 30.

Now returning to the limitation in the rotational movement between the crank arm 40 and the sprocket member 31. The limitation in relative motion between the sprocket member 31 and the crank arm disc 41 may be provided by suitable means, one example of such being shown in Fig. 5.

Fig. 5, shows a partial assembly of elements of a one- way clutch 1 and parts of the chain drive of an electrically powered bicycle. The partial assembly shown comprises a crank arm 40 and a sprocket 30 with a sprocket member 31. The crank arm 40 may be the crank arm 40 as described in connection with Fig. 4 above. The sprocket 30 with the sprocket member 31 is aligned with the crank arm 40 as it would be when mounted on a drive shaft 20 of an electrically powered bicycle 100. In the chosen view, the sprocket 30 with the sprocket member 31 almost hides the entire crank arm 40. However, the crank arm shaft 44 with the hole 47 for mounting a pedal 105 can be seen extending from behind the sprocket 30. Also, the drive shaft connection member 49 of the crank arm 40 is visible through a central throughgoing aperture 32 in the sprocket member 31. In further embodiments, the sprocket member 31 may form an integrated portion of the sprocket 30. In this case, the central, throughgoing aperture 32 can be said to be formed in the sprocket itself.

Further, in Fig. 5, the first cavities 80, which are formed in the crank arm disc 41, are visible through the six apertures formed in a circle around the central throughgoing aperture 32 in the sprocket member 31. These apertures form the bearings 70 for the displacement members 60. The displacement members are not shown in Fig. 5. In each of the first cavities 80, visible through the bearings 70, a flat portion 81 of the inner surface of the first cavities 80 as well as a sloping portion 82 of the inner surface of each of the first cavities 80 can also be seen. These will be described in further detail below.

In order to limit the rotational movement between the crank arm 40 and the sprocket member 31, one or more protrusions 140, studs, or knobs may be formed on either the sprocket member 31 or the crank arm 40, and extending in a direction towards the other of the sprocket 30 and the crank arm 40. These protrusions, studs, or knobs are configured to cooperate with respective elongate slits 141, grooves or channels of a suitable length, formed in the sidewall or in an edge of the opposite one of the sprocket 30 and the crank arm 40, where the protrusions 140, studs or knobs are formed.

In the embodiment shown in Fig. 5, radially extending protrusions 140 (also visible in Fig. 4) are formed on an outer surface of the drive shaft connection member 49 of the crank arm 40. The protrusions cooperate with elongate slits 141 formed in an inwardly facing edge (circumference) of the central throughgoing aperture 32 in the sprocket member 31. It will be appreciated, that the protrusions 140 and slits 141 may be reversed between drive shaft connection member 49 and the sprocket member 31 in other embodiments (not shown). Further, it may be appreciated that the protrusions 140 may alternatively be provided in an axial direction, extending from a side surface of the sprocket member 31 or the crank arm disc 41, and cooperating with slits 141 formed in a sidewall of the opposite one of the sprocket member 31 or the crank arm disc 41.

It will further be appreciated from Fig. 5 that the limited rotational movement between the crank arm 40 and the sprocket 30/sprocket member 31 is achieved by the slits 141 having a finite length, which will provide stops for the displacement of the protrusions 140, when the protrusions are slideably displaced from one end of slits 141 to another. The length of each of the slits/grooves/channels 141 is configured such that the relative movement is limited between two extreme positions shown in Fig. 3A and Fig. 3C, respectively, as will be explained in further detail below. The limitation is a consequence of the protrusions/studs/knobs 140 reaching the ends of the elongate slits/grooves/channels 141.

For simplicity, in Figs. 3A-F the mechanism for limiting the rotational movement between the crank arm 40 and the sprocket member 31 is not shown.

Now returning to Figs. 3A-F, the drive disc 50, has a first side/surface 51 facing the sprocket 30/sprocket member 31, and an opposite side/surface 52 facing away from the sprocket, and a circumferential rim 53. Fig. 3A further shows the axis A of the drive disc 50, the sprocket 30, and the crank arm disc 41, the axis A coinciding with the axis A of the drive shaft 20 (when the drive disc 50, the sprocket 30, and/or the crank arm disc 41 are mounted thereon), the drive shaft not being shown in the figure. Preferably, the side/surface 52 facing away from the sprocket 30, or the circumferential rim 53, comprises means for connecting the drive disc 50 to the output drive 109 of the electric motor 10 (or as mentioned above, the drive disc 50 may be the output drive 109).

The drive disc 50 further has one or more engagement sockets, formed by second cavities 90, preferably in the form of concave indentations formed in the first side/surface 51. The second cavities 90 preferably form concave, part-spherical indentations in the first side/surface 51, or at least with a shape corresponding to an outer surface of a portion of the displacement member(s) 60. The second cavities 90, thereby are configured for receiving, engaging and locking a portion of the displacement members 60.

In these embodiments, the second cavities 90 are formed in a circle in a radial distance away from the axis A of the drive disc 50. Preferably, the one or more second cavities 90 is/are formed at the same distance (radius) from the central axis A on the drive disc, as the first cavities 80 in the crank arm disc 41.

Preferably, the second cavities 90 are formed within a distance of less than a width/diameter of the second cavities from each other. The first cavities 80 may be formed considerably further apart (in circumferential direction). Thus, in most practical applications, there are considerably more second cavities 90 than there are first cavities 80 in the one-way clutch 1.

The at least one displacement member 60 is slideably displaceable in the bearing 70 formed through the sprocket 30 between to positions:
- one position, where a portion of the displacement member 60 has entered into and engages (or locks into) a first cavity 80 of the crank arm disc 41, and
- another position, where a portion of the displacement member 60 has entered into and engages (or locks into) a second cavity 90 of the drive disc 50.
In either position, a portion of the displacement member 60 remains engaged with a portion of the bearing 70. Thereby, the sprocket 30 is either engaged to rotate with the crank arm 40 or with the drive disc 50.

The Figs. 3A-F, as mentioned previously, show steps or stages during use of the one-way clutch 1.

Fig. 3A shows the components of the one-way clutch 1, i.e. the drive disc 50, the sprocket 30, and the crank arm disc 41, in a neutral or rest stage, where no force is applied to the pedals, and thereby no torque is transferred via the crank arm 40 to the drive shaft 20. The displacement member 60 is shown to reside partially within a first cavity 80. In this stage the electric motor 10 (via drive disc 50) may not transfer any force to the sprocket 30 or crank arm 40. The geometry of the first cavity 80 is such that the displacement member 60 can be brought out of engagement/contact with the second cavity 90 in the drive disc 50.

In Fig. 3A it can be seen how the displacement member 60 is coupled to the crank arm 40 via crank arm disc 41, and that the drive disc 50 is prevented from transferring any forces to the displacement member 60, when the crank arm 40 is in the rest position.

The displacement member 60 may be biased, e.g. by magnetic forces, toward the position shown in Fig. 3A, such that in the rest position, the displacement member stays in a first cavity 80 due to the bias. However, in preferred embodiments, the displacement member is unbiasedly/freely slideable between the two positions in engagement with the crank arm or the drive disc, respectively.

The second cavities 90 of the drive disc 50 have a geometry, such that in stages/situations, where there is no trot in the pedals 105, but the motor 10 (the drive disc 50) is still rotating, the geometry provides a resulting force on the displacement member 60, such that it will be pushed away from the drive disc 50, and into the geometry of a first cavity 80 of the crank arm disc 41.

From Fig. 3A it will be appreciated, how room is made for the displacement member 60 in the first cavity 80, by a flat portion 81 of the surface of the first cavity 80.

When a person/user/bicyclist treads in the pedals 105, in the forward direction 110 - i.e. the direction that will cause the bicycle to move in a forward direction - contact is made between an edge 71 of the bearing 70 in the sprocket 30/sprocket member 31, the displacement member 60, and a sloping portion 82 of the surface of the first cavity 80 of the crank arm disc 41. This is illustrated in Fig. 3B, where the rotation induced by the trot in a pedal 105 in the forward direction is represented by an arrow 110. This is caused by a slight forward rotational movement of the crank arm disc 41 relative to the sprocket member 31, allowed by the protrusions 140 and slits 141 of the limitation mechanism mentioned above in connection with Fig. 5.

In the situation in Fig. 3B, the sprocket 30/sprocket member 31 is influenced by a force, F_{sprocket} 130, from the endless chain 106, that will initially prevent the sprocket 30/sprocket member 31 from rotating when contact is made by the displacement member 60.

The force induced by the rotation of the crank arm 40, F_{crank} 131, has two components, one counteracting the force of the sprocket 30 in a tangential direction, F_{crankT} 132, and one in the axial direction, F_{crankA} 133, due to the sloping portion 82 of surface of the first cavity 80 of the crank arm disc 41.

As illustrated in Fig. 3B, the distribution of force will cause the displacement member 60 to be displaced in a direction towards the drive disc 50, as the user's trot overcomes the frictional forces from the sprocket and chain (and causes a rotation of the sprocket/sprocket member 31).

Eventually, the force in the axial direction, F_{crankA} 133, will cause the displacement member 60 to slide into engagement with the second cavity 90 formed in the drive disc 50, whereby the sprocket 30 and the electric motor 10 are coupled.

When the displacement member 60 is engaging a second cavity 90 in the drive disc 50, the electrical motor 10 may transfer power to the sprocket member 31/sprocket 30 via the displacement member 60. This situation is illustrated in Fig. 3C. The motor 10 drives the drive disc 50 in the forward direction indicated by arrow 112 in Fig. 4C.

As can further be seen in Fig. 3C, the forward trot 110 in the pedals 105 has caused the crank arm disc 41 to be rotated forward relative to the sprocket 30. The above mentioned protrusions/studs/knobs 140 have moved in the slits/grooves/channels 141 to an extreme end thereof, whereby a surface portion 48 of the crank arm disc 41 adjacent to the first cavity 80 covers or is aligned with the bearing 70, and aids in maintaining the displacement member 60 in engagement with the second cavity 90 in the drive disc 50. The arrow 134 indicates the axially inwardly directed force of the crank arm disc 41 on the displacement member 60.

The arrow 135 indicates the force, F_{drive}, applied by the drive disc 50 on the displacement member 60. The force , F_{drive} 135, induced by the rotation 112 of the drive disc 50, has two components. A first component, F_{driveA}, illustrated by arrow 136, counteracts the axially inwardly directed force 134 of the crank arm disc 41 on the displacement member 60, in the axial direction. A second component, F_{driveT}, illustrated by arrow 137, provides a forward torque on the sprocket 30 - via the displacement member 60 - in a tangential direction.

If the bicyclist stops rotating the pedals 105 (and thereby the crank arm 40 and the crank arm disc 41), the drive disc 50 will continue to rotate for a short while. This situation is shown in Fig. 3D, where arrow 112 indicates the forward rotation of the drive disc 50, whereas there is no arrow indicating the rotation of the crank arm disc 41. Thus, Fig. 3D shows the situation in the exact instant when the pedaling discontinues. Due to the forward thrust of the drive disc 50, F_{driveT} 137, a relative rotation between the sprocket 30 and the crank arm disc 41 will occur.

This will cause a movement of the above-mentioned protrusions/studs/knobs 140 towards the opposite end of the cooperating slits/grooves/channels 141 (relative to the situation shown in Fig. 3C), and towards a relative rotational situation between the crank arm disc 41 and the sprocket member 31 as shown in Fig. 3E, where the surface portion 48 of the crank arm disc 41 adjacent to the first cavity 80 no longer covers or is aligned with the bearing 70. Thereby, the first component, F_{driveA}, illustrated by arrow 136, of the force, F_{drive}, applied by the drive disc 50 on the displacement member 60, will cause an axial displacement of the displacement member 60 out of engagement with the second cavity 90 in the drive disc 50. Thereby, the discontinued pedaling will cause a disconnection of the motor 10 from the sprocket 30 and crank arm 40.

A torque sensor e.g. formed in the first cavity 80 of the crank arm disc 41(not shown) or otherwise as indicated above, sends signals to control the force applied by the electric motor 10. Thus, as long as the bicyclist maintains a slight forward pedaling, the rotation being indicated by arrow 110, then the rotational displacement between the crank arm disc 41 and the sprocket member 31/sprocket 30 shown in Figs 4C-D is maintained, keeping the drive disc 50 in coupling with the sprocket 30/sprocket member 31. The arrow 110 indicates that the forward rotation movement in Fig. 3C follows the forward rotation of the drive disc 50, as indicated by arrow 112.

When the pedaling stops, the force from the drive disc 50 will push the displacement member 60 back towards the crank arm disc, and the electric motor 10 can no longer transfer any significant force. Since the relative rotation between the crank arm disc 41 and the sprocket member 31/sprocket 30 is immediate, as a consequence of the discontinued pedaling, the torque from the electric motor 10 will immediately push the displacement member 60 back towards the crank arm disc 41, whereby a kick-back is prevented. As the displacement member 60 moves back towards the crank arm disc 41, as shown in Fig. 3F, the displacement member 60 will end in the same position as shown in Fig. 3A. We note that a similar relative movement between the sprocket 30 and the crank arm disc 41 will of course also occur if the pedaling is not only discontinued, but also reversed, such that the rotation of the crank arm 40 is in the opposite direction of arrow 110. This will activate the coaster brake of the bicycle.

In order to brake the bicycle, using the coaster brake, the rotation on the crank arm 40 is inversed relative to the indicated forward direction 110, shown in the figures. This will cause a movement of the above-mentioned protrusions/studs/knobs 140 all the way to the extreme end of the opposite end of the cooperating slits/grooves/channels 141 (relative to the situation shown in Fig. 3C). Therefore, a backward rotation (counter to arrow 110) of the crank arm 40 will cause a backwards rotation of the sprocket member 31 and thereby the sprocket 30 and the endless chain 106. The backward braking movement, as described above in relation to the discontinued pedaling, will of course also force the crank arm disc 41 and the sprocket member 31 towards a relative rotational situation as shown in Fig. 3E, where the surface portion 48 of the crank arm disc 41 adjacent to the first cavity no longer covers or is aligned with the bearing 70.

The discontinued pedaling or the braking, will cause the displacement member 60 to be pushed back to the position in engagement with the first cavity 80, i.e. the situation shown in Fig. 3A. When the displacement member 60 is in engagement with the first cavity 80, a backward rotation of the crank arm disc 41 will be transferred to the sprocket 30, and from there to the endless chain 106, which will activate the coaster brake build into the rear hub in conventional manner.

The shape of the surface at the end of the first cavity 80 opposite to the sloping portion 82 of the surface of the first cavity of the crank arm disc forms a sharp ledge 83. When the relative rotation is in the most extreme rearward position (as shown in Fig. 3A), the sharp ledge 83 is aligned with the inner wall of the bearing 70 and no forces push the displacement member out of engagement with the first cavity 80.

In some instances, when the bicyclist starts inducing a forward rotation 110, the displacement member 60 is not aligned with a second cavity 90 in the drive disc 50, but instead is located adjacent to an inter-cavity surface portion 54 of the drive disc 50, as shown in Fig. 3F. As the electric motor 10 starts rotating at even a slight trod in the pedals 105, and due to the input (a start-signal to the electric motor 10) from the torque sensor, this is not a problem. The crank arm disc 41 will rotate slower than the drive disc 50, and therefore the displacement member 60 and a second cavity 90 in the drive disc 50 will quickly come into alignment, and thereby be forced into engagement as described above.

Above, the function of the one-way clutch 1 has been described in the context of the single first cavity 80, as shown in Figs. 3A-F. However, the person skilled in the art will realize that a number of first cavities 80 and a like (equal) number of corresponding displacement members 60 distributed as described in connection with Figs. 4 and 5 above may apply.

A common factor for the embodiments described above is that the displacement member 60 is displaceable in an axial direction between components arranged side by side in the axial direction, defined by the longitudinal axis A of the drive shaft 20.

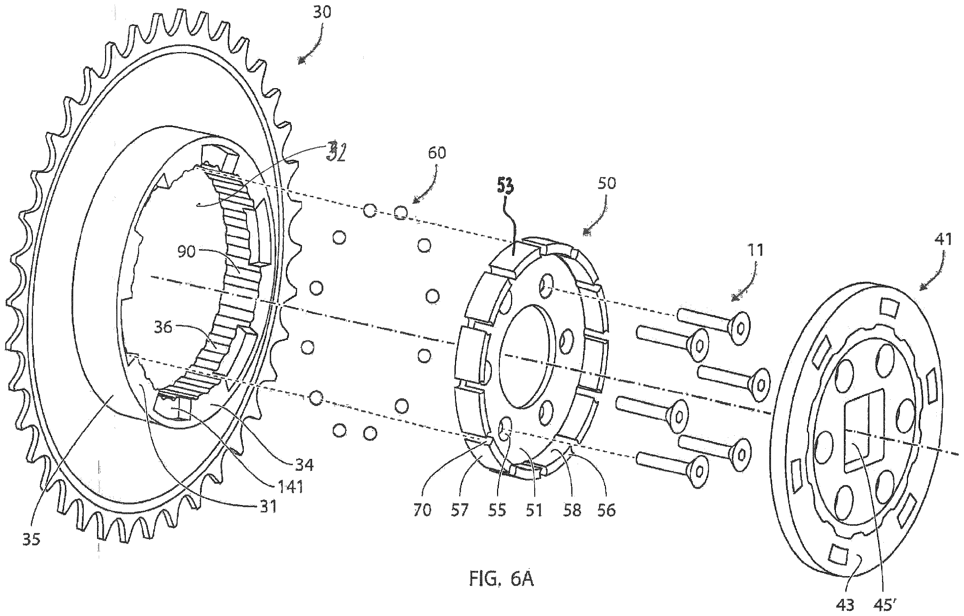

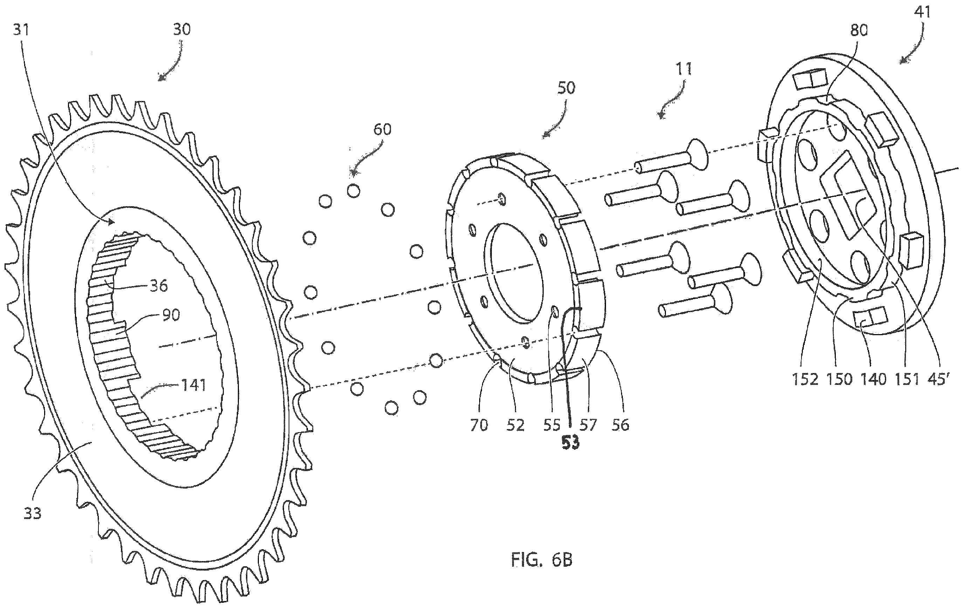

In the following, and with reference to Figs. 6-8, embodiments where a displacement member 60 of a one-way clutch 1 is displaceable in a radial direction of a sprocket member 31/sprocket 30, a crank arm disc 41 and a drive disc 50, is described. Elements having the same function as in the embodiments described above will be described using like reference numbers.

Figs. 6A-B shows a sprocket 30 with a sprocket member 31, a drive disc 50 and a crank arm 40, comprising a crank arm shaft 44 and a crank arm disc 41.

The sprocket member 31 may be formed integral with the sprocket 30, or preferably, the sprocket member 31 and the sprocket 30 may be formed as two separate but connectable components, as can be appreciated from Figs. 6-8. The two separate but connectable components may be connected in a rotation fast manner relative to each other. In the latter case, when the components are separate, the sprocket member 31 may form part of a replaceable unit or assembly forming the one-way clutch 1.

The sprocket member 31 comprises an inner side 33 facing towards the frame 101 and electric motor 10 of the bicycle 100, and an outer side 34 facing the drive disc 50 and a crank arm 40. Further, the sprocket member 31 comprises a radially outer (radially outwardly facing) surface 35 and a radially inner (radially inwardly facing) surface 36.

The sprocket 30 and the sprocket member 31 may be rotation-fast connected in a number of ways, e.g. press fit, mechanical fasteners like screws or pals, or via corresponding shapes of a central aperture (not shown) of the sprocket 30 and the radially outer surface 35 of the sprocket member 31.

Also, the crank arm shaft 44 may be formed integral with the crank arm disc 41, or preferably, the crank arm shaft 44 and the crank arm disc 41 may be formed as two separate connectable components, that may be connected in a rotation fast manner relative to each other, as shown in Fig. 6. Thereby, the crank arm disc may form part of a unit or assembly forming the one-way clutch 1. The crank arm disc 41 of the crank arm 40 has an inner side/surface 42 facing towards the sprocket 30 with the sprocket member 31 and the drive disc 50, and an outer side/surface 43 facing the crank arm shaft 44.

A hole 47 for mounting a (not shown in Figs 6A-B) pedal 105 further is shown in Figs. 6A-B.

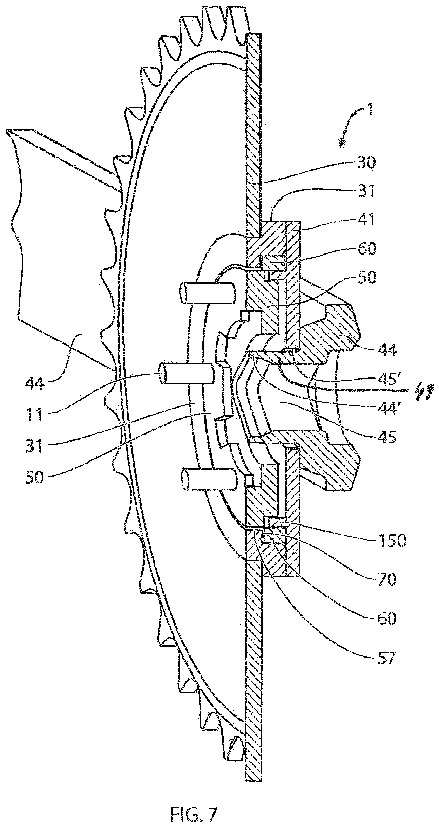

The crank arm shaft 44 comprises a center bore 45 for receiving the drive shaft 20 (not shown in Figs. 6A-B), see Figs. 7-8, the center bore 45 being formed in an radially central portion of the crank arm shaft 44 in a portion of the crank arm 40 forming a drive shaft connection member 49. The center bore 45 extends through the drive shaft connection member 49 of the crank arm shaft 44. The center bore 45 has a square cross-section, such that it may be mounted on the drive shaft 20 in a rotation fast manner, the drive shaft 20 having a corresponding square cross-sectional shape. In other embodiments (not shown), other corresponding cross-sectional shapes of the drive shaft 20 and center bore 45 may be utilized.

In embodiments where the crank arm disc 41 forms part of a replaceable one way clutch unit/assembly (i.e. the crank arm disc 41 is an individual component separate from the crank arm 40), the crank arm disc 41 preferably also has a central bore 45', which may be attached to drive shaft connection member 49. The central bore 45' allows the coaxial mounting of the crank arm disc 41 around the drive shaft connection member 49. The central bore 45' of the crank arm disc 41 may have a shape corresponding to a shape of an outer surface of the drive shaft connection member 49 in order to allow a rotation-fast connection thereto. In Figs. 6A-B, the central bore 45' is square and the drive shaft connection member 49 has a corresponding/mating square cross-section. In other embodiments (not shown), however, other matching shapes may be utilized. Also, various other types of mechanical connections, e.g. pins, pals, screws and the like may be utilized.

Thereby, the crank arm 40 and the crank arm disc 41 are mountable on the drive shaft 20 (which for simplicity is not shown in Figs. 6A-B) in a rotation fast manner relative to each other in such a way that a rotation of the crank arm 40 and the crank arm disc 41 (relative to the frame 101) will cause a rotation of the drive shaft 20.

The drive disc 50 is arranged between the sprocket member 31 and the crank arm disc 41. In the drive disc 50, one or more displacement members 60 are slideably displaceable, which will be described in further detail below.

The drive disc 50 may form an extension of the drive output 109, or - as shown - form a part which may be connected thereto. In Figs. 6A-B a set of pins/screws 11 are shown. The pins 11 are receivable in apertures 55 through the drive disc 50 and may connect to corresponding connection means on/in the drive output 109.

As mentioned above, the drive disc 50, the sprocket member 31, the crank arm disc 41, and the displacement member(s) form part of the one-way clutch 1. They may form a replaceable unit/assembly, which is connectable to the sprocket 30 and the crank arm shaft 44 of an electrically powered bicycle 10.

The sprocket 30 and the sprocket member 31 are also mounted coaxially around the (not shown) drive shaft 20, such that the sprocket 30 with the sprocket member 31 is freely rotatable relative to the drive shaft 20, and coaxially with the crank arm disc 41, and with the drive disc 50.

However, the rotation of the sprocket 30 relative to the adjacent crank arm disc 41 (and thereby the crank arm 40), is limited, such that the relative rotation between the sprocket 30 and the crank arm disc 41 is only a few degrees, such as 5-30°.

In order to limit the rotational movement between the crank arm 40 and the sprocket member 31, one or more protrusions/studs/knobs 140 may be formed on either the sprocket member 31 or the crank arm 40, and extending in a direction towards the opposite one of the sprocket 30 and the crank arm 40. These protrusions/studs/knobs are configured to cooperate with respective elongate slits/grooves/channels 141 of a suitable length, formed in the sidewall or in an edge of the other of the sprocket 30 and the crank arm 40, which does not have the protrusions/studs/knobs 140 formed in them.

In the embodiment shown in Figs. 6A-B, radially extending protrusions 140 are formed on the inner side/surface 42 of the crank arm disc 41. The protrusions cooperate with elongate slits 141 formed in the outwardly facing surface 34 of the sprocket member 31. It will be appreciated, that the protrusions 140 and slits 141 may be reversed between crank arm disc 41 and the sprocket member 31 in other embodiments (not shown).

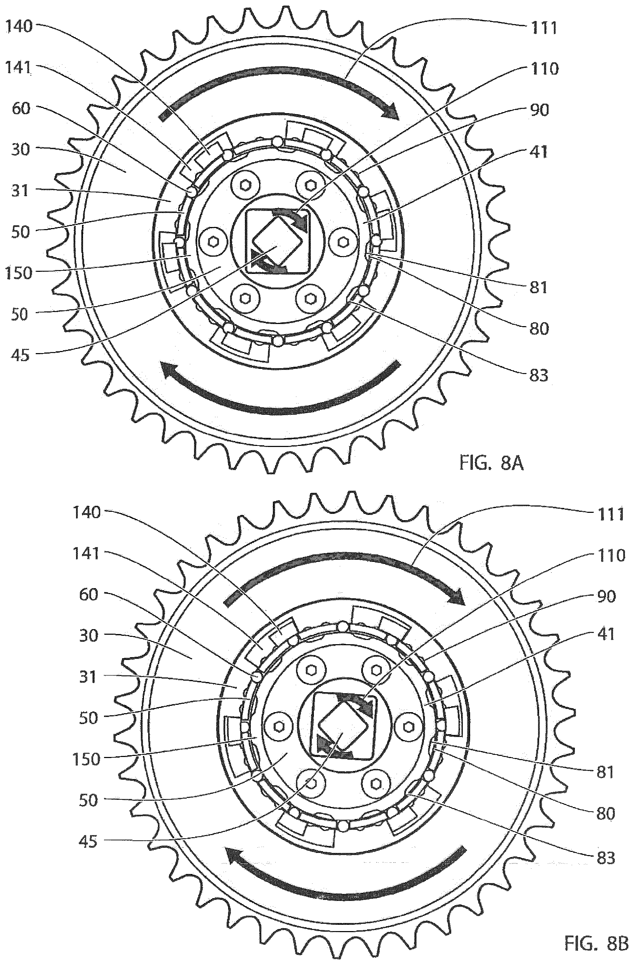

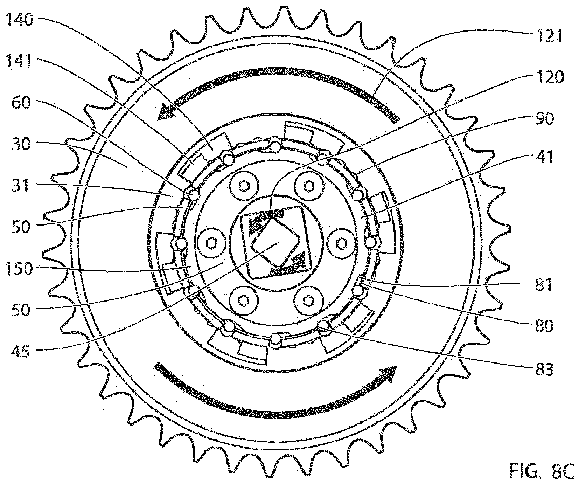

It will further be appreciated from Figs. 6A-B, that the slits 141, having a finite length will secure a limited rotational movement between the crank arm 40 and the sprocket 30/sprocket member 31, by the protrusions 140 being slideably displaceable from one end of the slits 141 to another. The length of each of the slits/grooves/channels 141 is configured such that the relative movement is limited between two extreme positions shown in Fig. 8B and Fig. 8C, respectively, as will be explained in further detail below. The limitation is a consequence of the protrusions/studs/knobs 140 reaching the ends/stops of the elongate slits/grooves/channels 141.

Also shown in Figs. 6A-B, the drive disc 50 has a first side/surface 51 facing the crank arm 40 and a second side/surface 52, facing the sprocket 30 with the sprocket member 31 (or the frame 101 of the bicycle, when mounted), and a circumferential rim 53. The drive disc 50 in this embodiment further comprises a ring-shaped flange 56 extending in the axial direction from the first surfaces 51, i.e. perpendicularly relative to the surfaces 51, 52 of the drive disc 50. The ring-shaped flange 56 comprises a radially outer (radially outwardly facing) surface 57 and a radially inner (radially inwardly facing) surface 58. The ring-shaped flange 56 may - as shown in this embodiment - be formed at the outer periphery/rim 53 of the drive disc 50.

At least one hole/aperture may be formed in a radial direction through the flange 56 of the drive disc 50, from the radially outer (radially outwardly facing) surface 57 and to the radially inner (radially inwardly facing) surface 58. The at least one hole/aperture forming a bearing 70 configured for slideably guiding a displacement member 60 in a radial direction. The displacement member 60, preferably in the form of cylindrical object, is arranged snugly in the bearing 70, and displaceable in the radial direction perpendicular to the longitudinal axis A of the drive shaft 20. In Figs. 6A-B the displacement members are illustrated as spheres. In embodiment they may, as mentioned preferably be cylindrical, with a length corresponding to the width of the ring-shaped flange 56 of the drive disc.

In the shown embodiment there are twelve bearings 70, and corresponding displacement members 60, but another number is also conceivable, e.g. 8-20.

Fig. 6B further shows that the inwardly facing surface 42 of the crank arm disc 41 has a ring-shaped crank flange 150. The ring-shaped crank flange 150 extends in an axial direction from the inwardly facing surface. The ring-shaped crank flange 150 comprises a radially outer (radially outwardly facing) surface 151 and a radially inner (radially inwardly facing) surface 152.

Fig. 6B further shows that twelve first cavities 80 or indentations are formed in the radially outer (radially outwardly facing) surface 151 of the ring-shaped crank flange 150 of the crank arm disc 41. In other embodiments (not shown), another number of first indentations may be used, such as 8-11 or 13-20. As mentioned above, at least one first cavity 80 is arranged in the crank arm disc 41. The number of first cavities 80 in the crank arm disc 41 matches the number of bearings 70 in the drive disc 50. The first cavities 80 are formed in a circle in a radial distance away from the axis A of the crank arm disc 41 (as defined through the middle of the center hole 45, and coinciding with the longitudinal axis A, of the drive shaft 20 when the crank arm disc 41 is mounted thereon).

The at least one first cavity 80 is shaped and sized and located such that it is/they are configured to receive a portion of the displacement member 60. The shape of the first cavity/cavities 80 is described in further detail below.

The radially inner surface 36 of the sprocket member 31 comprises one or more engagement sockets, formed as second cavities 90, preferably in the form of concave indentations formed in the radially inner surface 36. The second cavities 90 preferably form concave, part-cylindrical indentations in the radially inner surface 36, or at least with a shape corresponding to an outer surface of a portion of the displacement member(s) 60. The second cavities 90 thereby are configured for receiving, engaging and locking a portion of the displacement members 60.

In these embodiments, the second cavities 90 are formed in a circle in a radial distance away from the axis A of the inner surface 36 of the sprocket member 31.

Preferably, a plurality of second cavities 90 are formed in the radially inner surface 36 of the sprocket member 31, one next to the other. The second cavities 90 are formed within a distance of less than a width/diameter of the second cavities 90 from each other. As shown, the first cavities 80 may be formed considerably further apart. Thus, in most practical applications, there are considerably more second cavities 90 than there are first cavities 80 in the one-way clutch 1.

The drive disc 50 and the sprocket member 31 are sized and configured such that the radially outer surface 57 of the peripheral ring-shaped flange 56 on the drive disc 50 fits into, and can be brought into close proximity with the radially inner surface 36 of the sprocket member 31, and in such a way that the drive disc 50 can rotate inside and relative to the sprocket member 31. Since the second cavities 90 are formed as depressions/indentations in the radially inner surface 36 of the sprocket member 31, the bearings 70 formed through the drive disc 50 and terminating in the radially outer surface 57 of the peripheral ring-shaped flange 56 of the drive disc 50, the bearings 70 can be brought into alignment with the second cavities 90.

Further, the drive disc 50 and the crank arm disc 41 are sized and configured such that the radially inner surface 58 of the peripheral ring-shaped flange 56 on the drive disc 50 fits over the ring-shaped crank flange 150 of the crank arm disc 41, such that the radially inner surface 58 of the peripheral ring-shaped flange 56 is adjacent to the radially outer surface 151 of the ring-shaped crank flange 150 of the crank arm disc 41, and in such a way that the drive disc 50 can rotate relative to the crank arm disc 41. Since the first cavities 80 are formed as depressions/indentations in the radially outer surface 151 of the ring-shaped crank flange 150 of the crank arm disc 41, the bearings 70 formed through the drive disc 50 and terminating in the radially inner surface 58 of the peripheral ring-shaped flange 56 of the drive disc 50, the bearings 70 can be brought into alignment with the first cavities 80.

The displacement member 60 is slideably displaceable in the bearing 70 formed through the drive disc 50 in a radial direction between two positions:
- one position, where a portion of the displacement member 60 has entered into and engages (or locks into) a first cavity 80 of the crank arm disc 41, and
- another position, where a portion of the displacement member has entered into and engages (or locks into) a second cavity 90 in the radially inner surface 36 of the sprocket member 31.
In either position, a portion of the displacement member 60 remains engaged with a portion of the bearing 70. Thereby, the drive disc 50 in this embodiment is either engaged with the crank arm 40 or with the sprocket member 31.

The Figs. 8A-C, as previously mentioned, show steps or stages during use of the one-way clutch 1.

Figs. 8A-C show the sprocket 30 with the sprocket member 31, the crank arm 40 with the crank arm disc 41, the drive wheel 50, and the displacement members 60 in a partial vertical section. For simplicity certain parts, such as the crank arm, have been cut away.

Fig. 8A shows a situation/stage/step where a bicyclist/user is initially providing a forward trot/pedaling in the pedals 105. This is represented with an arrow 110.

The forward direction 110 is the direction that will cause the bicycle to move in a forward direction.

The first cavities 80 are formed as elongate (along a circumferential direction) depressions/indentations in the radially outer surface 151 of the ring-shaped crank flange 150 of the crank arm disc 41, each cavity 80 having a tangential extension corresponding to 1½-2 times the diameter/maximum extension (in the radial direction) of a displacement member 60. Thereby, each of the first cavities have a flat bottom or inner surface portion 81. In at least one end of each of the first cavities 80 a gently sloping ledge 82 is formed, providing a gradual transition from the flat bottom or inner surface portion 81 to the radially outer surface 151 of the ring-shaped crank flange 150 of the crank arm disc 41.

Since the first cavities 80 have an elongate shape, a relative rotation between the crank arm disc 41 and the drive disc 50 is allowed until the displacement members 60 come into contact with the gently sloping ledge 82.

Thereby, when the forward rotation 110 of the crank arm 40 commences, the displacement members 60 are pushed out of the first cavities 80 by the gently sloping ledge 82, in a radially outward direction, and towards the second cavities 90 formed in the radially inner surface 36 of the sprocket member 31. The torque in the crank arm 40 is sensed by a sensor 160 located e.g. on the crank arm 40 as shown in Fig. 2 or otherwise as suggested above, e.g. in connection with the drive shaft 20. The sensor 160 activates the electric motor 10.

Thereby the electric motor 10 is connected to the sprocket member 31, and thereby to the endless chain 106 etc. as is the case with the Figs. 3-5 embodiments, described above. This is also illustrated in Fig. 8A by the arrow 111 showing the rotation of the sprocket 30 in forward direction.

As the forward trot/forward pedaling 110 is continued by the bicyclist/user, the situation/stage/step shown in Fig. 8B will occur.

As can be seen in Fig. 8B, the forward trot in the pedals 105 has caused the crank arm disc 41 to be rotated forward relative to the sprocket member 31. The above-mentioned protrusions/studs/knobs 140 have moved in the slits/grooves/channels 141 to an extreme end thereof. Thereby, a surface portion 48 of the radially outer surface 151 of the crank arm disc 41 adjacent to the first cavity 80 covers or is aligned with the bearing 70, and aids in maintaining the displacement member 60 in engagement with the second cavity 90 in sprocket member 31.

As long as the bicyclist/user maintains even a slight rotation in crank arm 40, the sensor sensors the movement, and maintains the drive of the electric motor 10.

A situation where the bicyclist/user stops pedaling or activates the coaster brake by a rearward trot, is shown in Fig. 8C. In Fig. 8C the rearward trot is indicated by the arrow 120, showing a rearwards rotation of the crank arm 40, i.e. a rotation opposite to the rotation indicated by arrow 110 in Figs 8A-B.

When the rearward rotation 120 of the crank arm 40 and thereby the crank arm disc 41 is commenced or the pedaling is simply discontinued, a relative rotational movement between the sprocket member 31 and the crank arm disc 41 will occur due to torque in the drive disc 50. This will bring the protrusions/studs/knobs 140 out of engagement with the extreme end of the corresponding slits/grooves/channels 141, and in motion towards the opposite extreme end of the slits/grooves/channels 141. Thereby, the surface portion 48 of the radially outer surface 151 of the crank arm disc 41 adjacent to the first cavities 80 is rotated away from covering/out of alignment with the bearings of the drive disc. Therefore, the displacement members 60 are no longer forced into engagement with the second cavities 90. As a consequence thereof, and due to the shape of the second cavities 90, the displacement members 60 are pushed out of engagement with the second cavities 90 and in a radial inward direction towards the first cavities in the crank arm disc 41. This will bring the drive disc 50, and thereby the electric motor 10, out of engagement with the sprocket 30, and the drive of the chain is thereby discontinued when there is no pedaling or a backward pedaling (braking) 120.

When the sensor 160, senses that there is no longer any forward rotation of the crank arm 40, the electric motor 10 is turned of.

The arrangement of the one-way clutch 1 allows the quick disengagement of the drive between the drive disc 50 and the sprocket member 31, whereby - even with a delay in the response time from the sensor 160, the sensor senses the discontinued (or rearward) pedaling to the time the electric motor is turned of - the bicyclist/user will not experience a kick-back in the pedals 105.

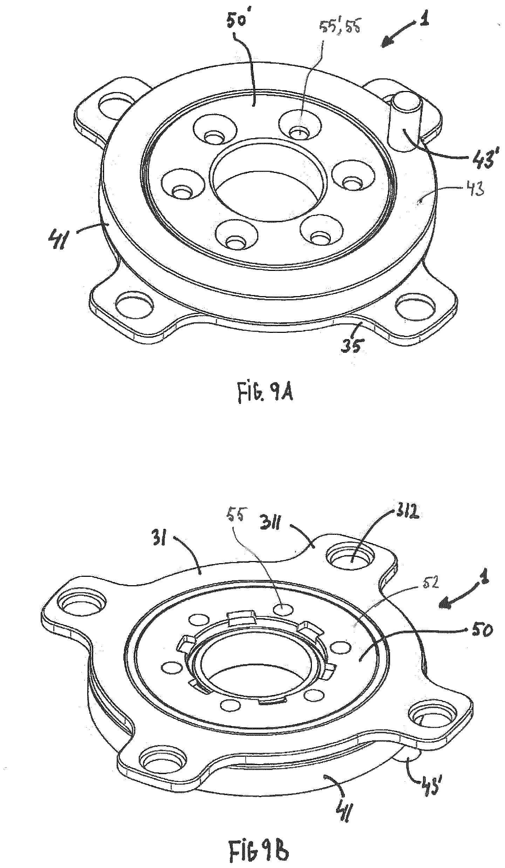

Fig. 8C shows the situation where a rearward rotation 120 of the crank arm 40 has been induced by the user/bicyclist, in order to activate the coaster brake of the electrically powered bicycle 100. In Fig. 8C the protrusions/studs/knobs 140 have been brought out of engagement with the forward extreme end of the corresponding slits/grooves/channels 141, as shown in Fig. 9B, and have been brought into contact with the opposite extreme back end of the slits/grooves/channels 141. This allows a transfer of force from the crank arm disc to the sprocket member 31 (with the drive disc 50 decoupled from the sprocket member 31). Thereby, the backward rotation 120 of the crank arm 40 is transferred to the sprocket member 31, the sprocket 30, and to the endless chain 106. This will cause an activation of the coaster brake mechanism of the rear wheel 103 hub. The arrow 121 in Fig. 8C indicates the rearward rotation of the sprocket.

In the following, and with reference to Figs. 9-14, further embodiments where a displacement member 60 of a one-way clutch 1 is displaceable in a radial direction relative to a sprocket member 31/sprocket 30, a crank arm disc 41 and a drive disc 50 is described. Elements having the same function as in the embodiments described above will be described using the same reference numbers.

The crank arm disc 41 may also be referred to as a crank arm member, and the drive disc 50 may also be referred to as a drive member. This may apply to both the embodiments described above as well as in the following.

Figs. 9A-B show a one-way clutch 1 comprising a sprocket member 31, a drive disc 50 and a crank arm disc 41, as well as displacement members 60, which are not visible in Figs 9A-B. Figs. 9A-B show the one-way clutch in an assembled state. The embodiment of the one-way clutch 1 in Figs. 9A-B may be a replaceable module/unit that may connect an electric motor 10 of an electrically powered bicycle 100 to the drive (the drive comprising drive shaft 20, sprocket 30, and crank arm 40). However, as with the previously described embodiments, alternatively, the one-way clutch 1, or parts/elements thereof may form integral parts of a drive and/or an electric motor/center motor 10 of an el electrically powered bicycle 100 with a coaster brake.

Fig. 9A shows the one-way clutch 1 from a side intended for connection to an output 109 from an electric motor 10 of an electrically powered bicycle 100, i.e. the side facing the frame 101 of the bicycle 100 (when connected to the electrically powered bicycle 100). Fig. 9A shows the one-way clutch 1 from the opposite side, i.e. the side facing away from the frame 101 of the bicycle 100 (when connected to the electrically powered bicycle 100), and facing the crank arm shaft 40.

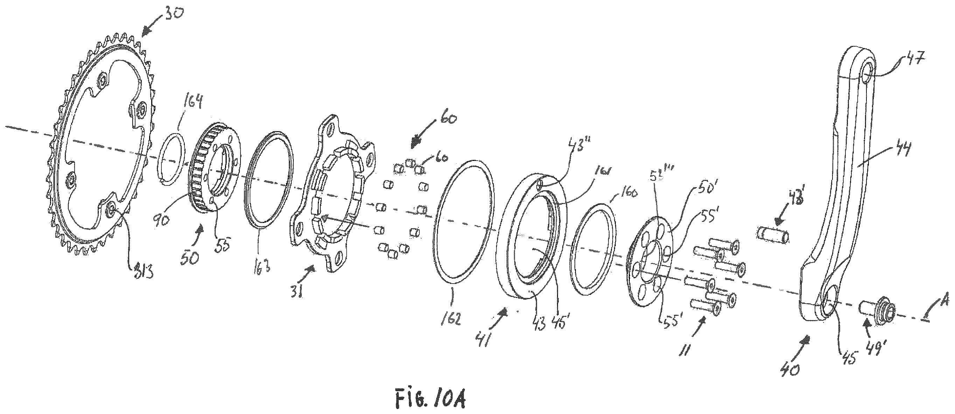

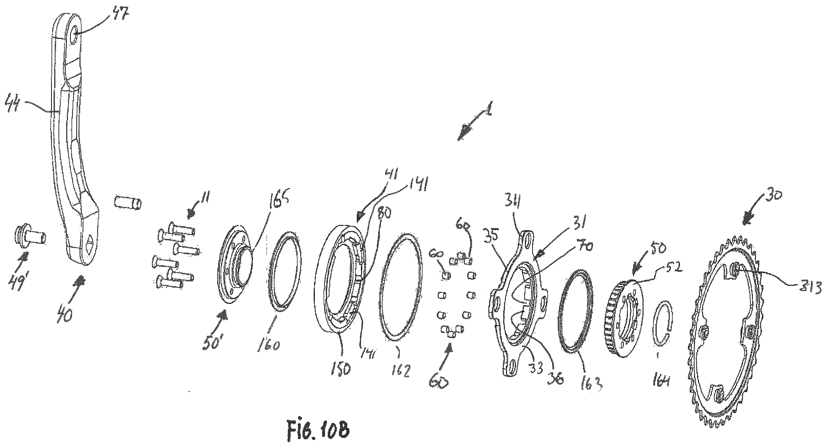

Figs. 10A-B, in an exploded, perspective view, show components of the one-way clutch 1 of Figs. 9A-B together with components drive of an electrically powered bicycle 100. As mentioned above the one-way clutch 1 comprises a sprocket member 31, a drive disc 50, a crank arm disc 41, and displacement members 60. The components of the drive of the bicycle comprises a sprocket 30 and a crank arm 40 with a crank arm shaft 44.

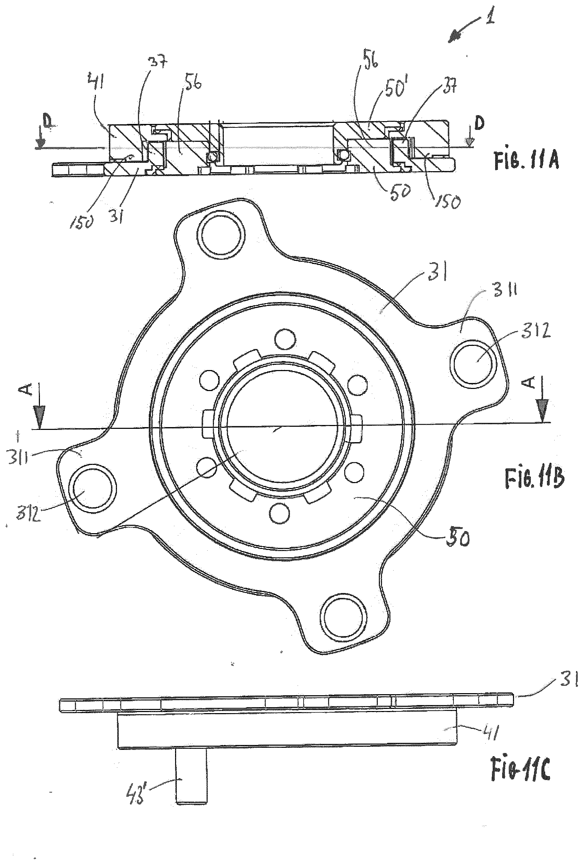

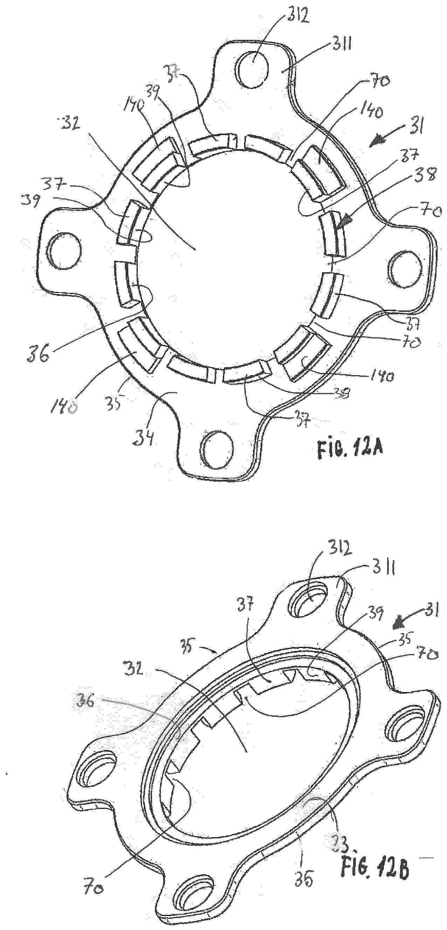

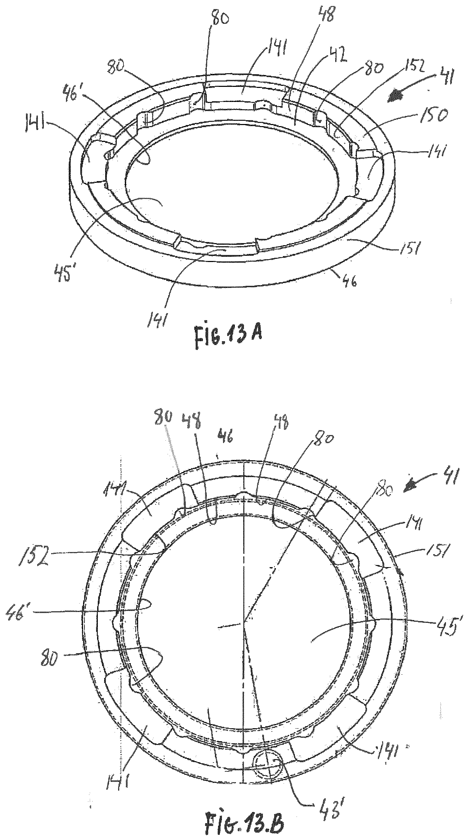

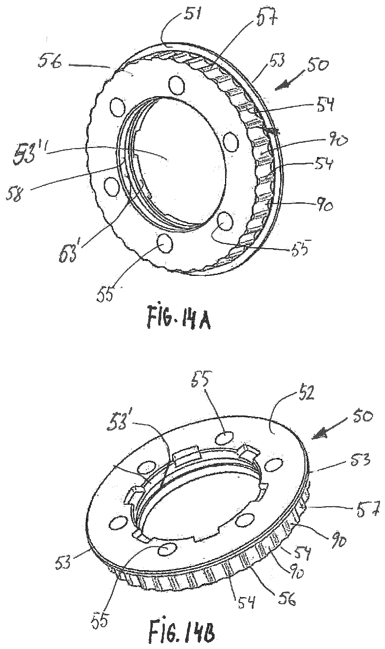

Fig. 10A-B are intended to provide an overview of how the elements/parts/members of the one way clutch work together, and together with the drive of the bicycle 100. In Figs. 11A-D certain functions of the one-way clutch are further shown. Figs. 12A-B show details of the sprocket member 31 according to the embodiment shown in Figs. 9-11. Figs. 13A-B show details of the crank arm disc 41 according to the embodiment shown in Figs. 9-11. Finally, Figs. 14A-B show details of the drive disc 50 according to the embodiment shown in Figs. 9-11.

The sprocket member 31 may - in not shown embodiments - be formed integrally with the sprocket 30, or as shown, the sprocket member 31 and the sprocket 30 may be formed as two separate but connectable components, as can be appreciated from Figs. 10A-B.
The two separate, but connectable components/parts may be connected in a rotation fast manner relative to each other. In the latter case, when the components are individual parts, the sprocket member 31 may form part of a replaceable unit or assembly forming the one-way clutch 1.

Referring now to Figs. 10A-B and Figs. 12A-B, the sprocket member 31 comprises an inner side (or inwardly facing side) 33 facing towards the frame 101 and electric motor 10 of the bicycle 100 (when mounted thereto), and an outer side 34 facing the crank arm disc 41 and a crank arm 40. Further, the sprocket member 31 comprises a radially outer (radially outwardly facing) surface 35 and a radially inner (radially inwardly facing) surface 36. Thus the sprocket member 31 is generally ring shaped, with a throughgoing central aperture 32.

The sprocket member 31 may, as shown, be connected to the sprocket 30 via sprocket flanges 311 formed as radially extending flanges from the periphery/ of the radially outer (radially outwardly facing) surface 35 of the sprocket member 31. The sprocket flanges 311 may, as shown, have throughgoing openings 312, which may be threaded (not shown), allowing connection of the sprocket member 31 to the sprocket e.g. via suitable bolts/screws (not shown) in mating threaded throughgoing openings 313 in the sprocket 30.

However, the sprocket 30 and the sprocket member 31 may be rotation-fast connected in a number of ways, e.g. press fit, mechanical fasteners like screws, pins or pals, or via corresponding shapes of a central aperture (not shown) of the sprocket 30 and the radially outer surface 35 of the sprocket member 31.

The sprocket member 31 in this embodiment further comprises a ring-shaped sprocket flange 37 extending in the axial direction from the outer side/surface 34, i.e. perpendicularly relative to the inner and outer surfaces 33, 34 of the sprocket member 31, and in a direction towards the crank arm 40 (when mounted). The ring-shaped sprocket flange 37 comprises a radially outer (radially outwardly facing) surface 38 and a radially inner (radially inwardly facing) surface 39. The ring-shaped sprocket flange 37 may - as shown in this embodiment - be formed at the inner side/surface 36 of the sprocket member 31, such that the radially inner (radially inwardly facing) surface 39 of the ring-shaped sprocket flange 37 is flush with the inner side/surface 36 of the sprocket member 31.

The radially outer (radially outwardly facing) surface/side 38 of the ring-shaped sprocket flange 37 of the sprocket member 31 is formed at a radial distance, radius r_{sproc_out}, away from the longitudinal axis A.

The radially inner (radially inwardly facing) surface/side 39 of the ring-shaped sprocket flange 37 of the sprocket member 31 is formed at a radial distance, radius r_{sproc_in}, away from the longitudinal axis A.

At least one hole/aperture may be formed in a radial direction through the ring shaped sprocket flange 37 of the sprocket member 31, from the radially outer (radially outwardly facing) surface 38 and to the radially inner (radially inwardly facing) surface 39. The at least one hole/aperture forms a bearing 70 configured for linearly, slideably guiding a displacement member 60 in a radial direction relative to the ring shaped sprocket flange 37 of the sprocket member 31, in the same manner as described in connection with the other embodiments above.

The ring-shaped sprocket flange 37 on the sprocket member 31 may thus be formed from a number a flange-sections, as shown in Figs. 12A-B.

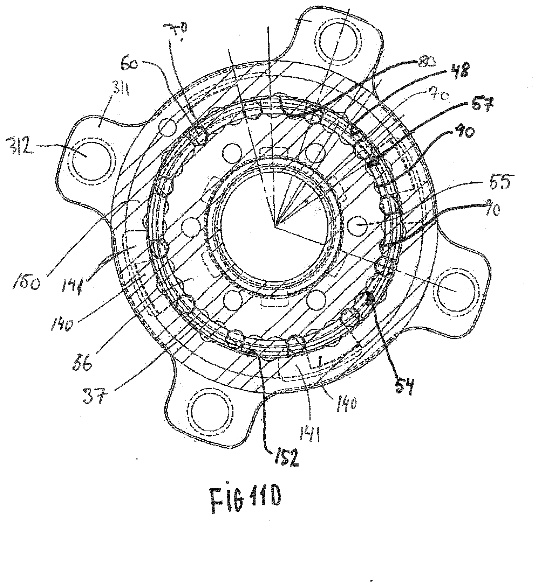

The displacement member 60, preferably in the form of cylindrical object, is arranged snugly in the bearing 70, as may be seen in Fig. 11D, and displaceable in the radial direction, relative to the sprocket member 31 and the bearing 70 formed therein, i.e. perpendicular to the longitudinal axis A of the drive shaft 20.

In Figs. 10A-B the displacement members 60 are illustrated as cylinders. The cylindrical displacement members 60 each has a length and diameter. The length of the displacement members may preferably be the same as the height of the ring shaped flange sprocket 37 on the sprocket member 31. The diameter of the cylindrical displacement members preferably corresponds to the width of the bearings, i.e. the distance between the flange sections of the ring shaped flange sprocket 37 on the sprocket member 31, whereby the mentioned snug fit is achieved.

In other embodiments (not shown), the displacement members 60 may alternatively be spherical. In this case the height of the ring shaped flange sprocket 37 preferably corresponds to a diameter of the spherical displacement members. Again, the diameter of the cylindrical displacement members preferably corresponds to the width of the bearings, whereby the mentioned snug fit is achieved.

Preferably, there is a displacement member 60 arranged in each bearing 70.

In the shown embodiment, there are twelve bearings 70 and corresponding displacement members 60. At least one bearing 70 and one associated displacement member 60 is needed. However, one aspect of the invention is that it has been realized that a larger number of simple shape - and thereby very robust and reliable - displacement members are preferred over a small number of complex shape and biased members. Therefore, preferably there are at least four displacement members, and more preferably 8-20.

The bearings 70 are arranged in a circle around central throughgoing aperture 32 of the sprocket member 31 and the longitudinal axis A, defined by the drive shaft 20 (not shown in Figs. 9-10), when mounted on the bicycle, and at a distance, i.e. radius, bearing from the center (axis A) of the sprocket member 31.

The crank arm shaft 44 may - in not shown embodiments - be formed integrally with the crank arm disc 41, or as shown in Figs 10A-B, the crank arm shaft 44 and the crank arm disc 41 may be formed as two separate connectable components/parts, that may be connected in a rotation fast manner relative to each other. Thereby, the crank arm disc may form part of a unit or assembly forming the one-way clutch 1.

A hole 47 for mounting a pedal 105 (not shown) further is shown in Figs. 10A-B. The hole 47 is formed in an end of the crank arm shaft 44 opposite to the end, where the crank arm shaft is connectable to the drive shaft 20 of the drive of the bicycle 100. The hole 47 may be provided with a threading for connecting the pedal 105.

The crank arm shaft 44 comprises a center bore or opening 45 for receiving the drive shaft 20 (not shown in Figs. 10A-B), in the same manner as was shown in connection with the embodiment discussed in connection with Figs. 7-8. The center bore/opening 45 is formed in a radially central/inner portion of the crank arm shaft 44, and in a portion of the crank arm 40 forming a drive shaft connection member 49. The center bore/opening 45 extends through the drive shaft connection member 49 of the crank arm shaft 44. The center bore 45 may comprise a portion having e.g. a square cross-section, such that it may be mounted on the drive shaft 20 in a rotation fast manner, the drive shaft 20 having a corresponding square cross-sectional shape. In other embodiments (not shown), other corresponding cross-sectional shapes of the drive shaft 20 and center bore 45 may be utilized. Figs. 10A-B also shows a crank arm connection bolt 49', known in the art.

Now referring to Figs. 10A-B and Figs.13A-B, the crank arm disc 41 is a generally ring shaped structure, having an inner side/surface 42 facing towards the frame 101 and electric motor 10 of the bicycle 100 (when mounted thereto), and facing towards the sprocket 30 with the sprocket member 31, and the drive disc 50. Opposite thereto, the crank arm disc 41 comprises outer side/surface 43 facing the crank arm shaft 44 (when mounted). The crank arm disc 41 further comprises an outer circumferential rim 46 (or radially outwardly facing rim/surface), and a radially inwardly facing surface 46'.

The crank arm disc 41 also has a central bore 45', which may be attached to the drive shaft connection member 49. The central bore/opening 45' allowing the coaxial mounting of the crank arm disc 41 around the drive shaft 20 and/or as drive shaft connection member 49 of the crank arm 40. In not shown embodiments, the central bore 45' of the crank arm disc 41 may have a shape corresponding to a shape of an outer surface of the drive shaft 20 itself or the drive shaft connection member 49 in order to allow a rotation-fast connection thereto, e.g. as shown in connection with the embodiment shown in Figs. 6A-B. Thus, the central bore 45' may be square and the drive shaft connection member 49 may have a corresponding/mating square cross-section. In other embodiments (also not shown), however, other matching shapes may be utilized.

However, preferably, and as shown in Fig. 10A-B, the central bore/opening 45' in the crank arm disc 41 is circular/cylindrical and configured such that it may receive portions of a drive disc 50,51', see further details below. Thus, the crank arm disc 41 is generally ring shaped. Thereby, a very compact, but also strong one-way clutch may be obtained.

In order to allow a rotation-fast connection of the crank arm disc 41 to the crank arm shaft 44, the outer surface 43 of the crank arm disc 41 is preferably provided with means for connecting to the crank arm shaft 44. As shown in Figs. 9-10, Fig. 11C and Fig. 13B, these means may be provided by a crank arm protrusion 43' in the form of a pin or pawl, and a mating structure on the crank arm shaft 44, such as a hole (not shown). The protrusion 43' may be releaseably assembled to the crank arm disc 41, e.g. by a mating opening 33" in the crank arm disc 41. The crank arm protrusion 43' is connectable/extending in an axial direction (along longitudinal axis A). Also, various other types of mechanical connections, e.g. pins, pals, screws and the like may be utilized.

Thereby, the crank arm 40 and the crank arm disc 41 are mountable on the drive shaft 20 (which for simplicity is not shown in Figs. 10A-B) in a rotation fast manner relative to each other in such a way that a rotation of the crank arm 40 and the crank arm disc 41 (relative to the frame 101) will cause a rotation of the drive shaft 20.

Fig. 13A further shows that the inwardly facing surface 42 of the crank arm disc 41 has a ring-shaped crank flange 150. The ring-shaped crank flange 150 extends in an axial direction from the inwardly facing surface 42. The ring-shaped crank flange 150 comprises a radially outer (radially outwardly facing) surface 151 and a radially inner (radially inwardly facing) surface 152. The radially outer (radially outwardly facing) surface 151 of the ring-shaped crank flange 150 is preferably formed as flush with the outer circumferential rim (outwardly facing surface/rim) 46 of the crank arm disc 41.

A set of first cavities 80 are formed in the crank arm disc 41. The at least one first cavity 80 is, as shown, formed as indentations in the a radially inner (radially inwardly facing) surface 152 of the ring-shaped crank flange 150.

Figs. 13A-B further shows that twelve first cavities 80 or indentations are formed in the radially inner (radially inwardly facing) surface 152 of the ring-shaped crank flange 150 of the crank arm disc 41. In other embodiments (not shown), another number of first indentations may be used, such as 8-11 or 13-20. However, as mentioned above, at least one first cavity 80 is arranged in the crank arm disc 41. However, the number of first cavities 80 in the crank arm disc 41 should match the number of bearings 70 in the sprocket member 31 and the number of displacement members 60.

The first cavities 80 are formed in a circle in a radial distance, r_{cav1}, away from the axis A of the crank arm disc 41 (as defined through the middle of the center hole 45, and coinciding with the longitudinal axis A, of the drive shaft 20 when the crank arm disc 41 is mounted thereon).

The at least one first cavity 80 is shaped and sized and located such that it is/they are configured to receive a portion of the displacement member 60. The shape of the first cavity/cavities 80 is described in further detail below.

In not shown embodiments, the first cavities 80 may be formed as elongate (along a circumferential direction) depressions/indentations in the radially inner surface 151 of the ring-shaped crank flange 150 of the crank arm disc 41. Each cavity 80 may have a tangential extension corresponding to 1½-2 times the diameter/maximum extension (in the radial direction) of a displacement member 60. Thereby, each of the first cavities have a flat bottom or inner surface portion. In at least one end of each of the first cavities 80 a gently sloping ledge may be formed, providing a gradual transition from the flat bottom or inner surface portion 81 to the radially inner surface 151 of the ring-shaped crank flange 150 of the crank arm disc 41.

Since the first cavities 80 have an elongate shape, in this not shown embodiment, a relative rotation between the crank arm disc 41 and the drive disc 50 is allowed until the displacement members 60 come into contact with the gently sloping ledge 82.

Thereby, when the forward rotation 110 of the crank arm 40 commences, the displacement members 60 are pushed out of the first cavities 80 by the gently sloping ledge, in a radially outward direction, and towards the second cavities 90 formed in the radially inner surface 36 of the sprocket member 31. This shape of the first cavities is shown in Figs. 8A-C, but may apply to the Figs. 9-14 embodiment.

However, it has been realized, as shown in Figs. 9-14, that the first cavities 80 may simply be formed as an indentation in the surface 152 having e.g. a part cylindrical shape corresponding in shape with an outer surface of the displacement members 60. Thus, the dimension of the part cylindrically shaped indentations/first cavities 80 may have a radius identical or slightly larger than a radius of the displacement members 60.

In either case the first cavities 80 are spaced apart in the surface 152, whereby inter-cavity surface portions 48 are formed adjacent to and between the first cavities 80. Preferably the extension (length) of the inter-cavity surface portions 48, are larger than the extent in the peripheral direction of the first cavities 80. Preferably, the inter-cavity surface portions 48 extend at least 2 or three times the extent in the peripheral direction of the first cavities 80.

Referring now to Figs 10A-B and Figs 14A-B, the one-way clutch 1 further comprises a drive disc 50. The drive disc 50 is a generally ring shaped structure, having a first/outer side/surface 51 facing towards the crank arm 40 (when mounted), and a second/inner side surface facing towards the frame 101 of the electrically powered bicycle 100 (when mounted). The drive disc further comprises a radially outwardly facing side/surface or circumferential rim 53, and a radially inwardly facing side/surface 53'. The drive disc further has a central throughgoing aperture 53" allowing the drive disc 50 to be mounted coaxially with the drive shaft 20.

In not shown embodiments, the drive disc 50 may forms an extension/part of the drive output 109, i.e. it may be formed integral with the drive output 109. However, as shown in Figs. 9-10, the drive disc 50 may form an individual or separate part, which is connectable to the drive output 109 of an electric motor 10 of a bicycle 100 in a rotation-fast manner, such that the drive disc 50 will rotate with the drive output 109 from the electric motor 10.

In Figs. 10A-B a set of pins/screws 11 are shown. The pins 11 are receivable in apertures 55 through the drive disc 50 and may connect to corresponding/mating connection means on/in the drive output 109 (for example in the same manner as illustrated in Fig. 2), or any intermediary parts, dependent on the location of the electric motor 10 on the bicycle 100, e.g. one or more cog wheels.

In the embodiment shown in Figs. 9-14, there are six apertures 55 and six pins/screws 11. However, another number of apertures 55 and pins/screws 11 may be chosen, e.g. 3, 4, 5, 7, 8, 9, 10, 11, or 12. Alternatively, pins/screws may be formed integrally with the drive disc 50 and extending from an inner side/surface 52 of the drive disc 50.

The apertures 55 are preferably arranged in a circle around central throughgoing aperture 53" in the drive disc 50 and the longitudinal axis A defined by the drive shaft 20 (not shown in Figs. 9-10), when mounted on the bicycle and at a distance, radius rₐₚₑᵣₜᵤᵣₑₛ, from the center (axis A) of the ring shaped drive disc 50. The radius, rₐₚₑᵣₜᵤᵣₑₛ, in which the apertures 55 is arranged is smaller than the distance/radius r_{bearing}, in which the displacement members 60 are arranged in bearings 70 through a portion of the sprocket member 31.

The drive disc 50 in this embodiment further comprises a ring-shaped drive flange 56 extending in the axial direction A from the first surface 51, i.e. perpendicularly relative to the surfaces 51, 52 of the drive disc 50. The ring-shaped drive flange 56 comprises a radially outer (radially outwardly facing) surface 57 and a radially inner (radially inwardly facing) surface 58. Preferably and as shown, the radially inner (radially inwardly facing) surface 58 of the ring-shaped drive flange 56 is flush with the radially inner (radially inwardly facing) surface 53' of the drive disc 50 as such.

In the Figs. 9-14 embodiments, second cavities 90 are formed in the radially outer (radially outwardly facing) surface 57 of the ring-shaped drive flange 56 of the drive disc 50

Preferably, a plurality of second cavities 90 are formed in the radially outer (radially outwardly facing) surface 57 of the ring-shaped drive flange 56 of the drive disc 50, one next to the other.

The second cavities are formed as part cylindrical indentations in the radially outer (radially outwardly facing) surface 57 of the ring-shaped drive flange 56 of the drive disc 50. The radius of these part cylindrical indentations, i.e. the second cavities 90, is the same as the radius of the cylindrical (or spherical (see above)) displacement members 60.

Further, the second cavities 90 are preferably formed within a distance of less than a width/diameter of the second cavities 90 from each other. As shown, the first cavities 80 may be formed considerably further apart. Thus, in most practical applications, there are considerably more second cavities 90 than there are first cavities 80 in the one-way clutch 1.

The radially outer (radially outwardly facing) surface 57 of the ring-shaped drive flange 56 of the drive disc 50 is formed at a radial distance, radius r_{cav2}, away from the longitudinal axis A. The radial distance, radius r_{cav2}, of the radially outer (radially outwardly facing) surface 57 of the ring-shaped drive flange 56 of the drive disc 50 is preferably slightly smaller than the radially distance, r_{sproc_in}, of the inner (radially inwardly facing) surface/side 39 of the ring-shaped sprocket flange 37 of the sprocket member 31, such that the two surfaces fit snugly against each other, and allows relative rotation between the drive disc 50 and the sprocket member 31. Further, this allows the drive disc 50 or at least the ring-shaped drive flange 56 of the drive disc 50 to be received in the ring-shaped sprocket flange 37 of the sprocket member 31, see e.g. Fig. 11A and 11D.

As mentioned above, the drive disc 50, the sprocket member 31, the crank arm disc 41, and the displacement member(s) 60 form part of the one-way clutch 1. They may form a replaceable unit/assembly, which is connectable to the sprocket 30 and the crank arm shaft 44, and to the electric motor 10 of an electrically powered bicycle 100.

In this embodiment, the sprocket member 31 is arranged between the drive disc 50 and the crank arm disc 41. The one or more displacement members 60 are linearly slideably displaceable through radially formed bearings in the sprocket member 31, which will be described in further detail below.

The sprocket 30 and the sprocket member 31 are also mounted coaxially around the (not shown) drive shaft 20, such that the sprocket 30 with the sprocket member 31 is freely rotatable relative to the drive shaft 20, and coaxially with the crank arm disc 41, and with the drive disc 50.

However, the rotation of the sprocket member 31 relative to the adjacent crank arm disc 41 (and thereby the crank arm 40), is limited, such that the relative rotation between the sprocket 30 and the crank arm disc 41 is only a few degrees, such as 5-30°.

In order to limit the rotational movement between the crank arm disc 41 and the sprocket member 31, one or more protrusions/studs/knobs 140 may be formed on either the sprocket member 31 or the crank arm 40 and extending in a direction towards the opposite one of the sprocket member 31 and the crank arm disc 41. The protrusions 140 could also be called angle limitation protrusions 140. These protrusions/studs/knobs are configured to cooperate with respective elongate slits/grooves/channels 141 of a suitable length, formed in the sidewall or in an edge of the other of the sprocket member 31 and the crank arm disc 41, which does not have the protrusions/studs/knobs 140 formed in them. The slits 141 could also be called angle limitation slits

In the embodiment shown in Figs. 10A-B, axially (axis A) extending protrusions 140 are formed on the outer side/surface 34 of the sprocket member 31, see Fig. 12A for detail. The protrusions 140 cooperate with elongate slits 141 formed in the inwardly facing surface 42 of the crank arm disc 41, see Figs. 13A-B. It will be appreciated that the protrusions 140 and slits 141 may be reversed between crank arm disc 41 and the sprocket member 31 in other embodiments (not shown). The protrusions 140 and the slits 140 are arranged in the same radial distance (radius) from the axis A on their respective components, such that when the one-way clutch 1 is assembled, the protrusions 140 may slide in, and relative to, the slits 141 in a tangential direction.

The protrusions 140 are shorter than the slits 141. Thus, it will further be appreciated from Figs. 10A-B that the slits 141 having a finite length will secure a limited rotational movement between the crank arm disc 41 and the sprocket 30/sprocket member 31, by the protrusions 140 being slideably displaceable from one end of the slits 141 to another. The length of each of the slits/grooves/channels 141 is configured such that the relative movement is limited between two extreme positions in the same manner as shown in Figs. 8B and Fig. 8C, respectively, as will be explained in further detail below. The limitation is a consequence of the protrusions/studs/knobs 140 reaching the ends/stops of the elongate slits/grooves/channels 141.

The protrusions 140 on the sprocket member 31 and the slits 141 in the crank arm disc are also shown in the section in Fig. 11D, from which the limit travel of the protrusions 140 in the slits 141 may be appreciated. In the Figs. 9-14 embodiment there are four protrusion 140 and four cooperating slits 141. It will however be possible to have another number of protrusions 140/slits 141, e.g. 1, 2, 3, 5, 6, 7 or 8.

As also discussed above, the drive disc 50 and the sprocket member 31 are sized and configured such that the radially outer surface 57 of the peripheral ring-shaped flange 56 on the drive disc 50 fits into, and can be brought into close proximity with the radially inner surface 36 of the sprocket member 31, at least the radially inwardly facing surface 39 of the ring shaped sprocket flange 37, and in such a way that the drive disc 50 can rotate inside and relative to the sprocket member 31.

Since the second cavities 90 are formed as depressions/indentations in the radially outer surface 57 of the drive disc 50, the bearings 70 formed through the ring shaped sprocket flange 37 of the sprocket member 31 and terminating in the radially inwardly facing surface 39 of the ring shaped sprocket flange 37, and since the sprocket member 31 and the drive disc 50 are rotatable relative to each other, the bearings 70 can be brought into and out of alignment with the second cavities 90, dependent on the relative rotation.

Further, the crank arm disc 41 and the sprocket member 31 are sized and configured such that the radially inner surface 152 of the ring shaped crank flange 150 of the crank arm disc 41 fits over the ring-shaped sprocket flange 37 of the sprocket member 41, such that the radially inner surface 152 of the ring shaped crank flange 150 is adjacent to the radially outer surface 38 of the ring-shaped sprocket flange 37 of the sprocket member 31, and in such a way that sprocket member 31 can rotate relative to the crank arm disc 41 (with the angle limitations described above).

Since the first cavities 80 are formed as depressions/indentations in the radially inner surface 152 of the ring-shaped crank flange 150 of the crank arm disc 41, and since the crank arm disc 41 and the sprocket member 31 are rotatable relative to each other, the bearings 70 formed through the ring-shaped sprocket flange 37 and terminating in the radially outer surface 38 of the ring-shaped sprocket flange 37 of the sprocket member 31, the bearings 70 can be brought into and out of alignment with the first cavities 80, dependent on the relative rotation.

The interrelationship between the ring shaped crank flange 150 (with the first cavities 80 formed in the radially inner surface 152), the intermediary ring shaped sprocket flange 37 with the radially through going bearings 70, and the ring shaped drive flange 56 with the second cavities 90 formed in the radially outer surface 57 thereof, is also shown in the section through the one-way clutch perpendicular to axis A shown in Fig. 11D. The displacement members 60 are also visible in the figure.

The displacement members 60 are slideably displaceable in the bearings 70 formed through the ring shaped sprocket flange 37 of the sprocket member 31 in a radial direction between two positions:
- one position, where a portion of each of the displacement members 60 has entered into and engages (or locks into) a first cavity 80 of the ring shaped crank flange 150 of the crank arm disc 41; and
- another position, where a portion of each of the displacement members 60 has entered into and engages (or locks into) a second cavity 90 in the radially outer surface 36 of the ring shaped drive flange 56 of the drive disc 50.

In either position, another portion of the displacement member 60 remains engaged with a portion of the bearing 70. Thereby, the sprocket member 31 (and thereby the sprocket 30) in this embodiment is either engaged with the crank arm disc 41 (and thereby the crank arm 40), or with the drive disc 50 and thereby the electrical motor 10.

The function of the one way clutch 1 may further be explained with reference to Figs. 8A-C, although the bearings 70, and the first and second cavities 80, 90 are distributed differently in this embodiment, relative to the embodiment shown in Figs. 6-8.

The Figs. 8A-C, as previously mentioned, show steps or stages during use of the one-way clutch 1.

Figs. 8A-C show the sprocket 30 with the sprocket member 31, the crank arm 40 with the crank arm disc 41, the drive disc 50, and the displacement members 60 in a partial vertical section. For simplicity, certain parts, such as the crank arm, have been cut away.

Fig. 8A shows a situation/stage/step where a bicyclist/user is initially providing a forward trot/pedaling in the pedals 105. This is represented with an arrow 110.

The forward direction 110 is the direction that will cause the bicycle to move in a forward direction.

In the Figs. 6-8 embodiment, the first cavities 80 are formed as elongate (along a circumferential direction) depressions/indentations in the radially outer surface 151 of the ring-shaped crank flange 150 of the crank arm disc 41, each cavity 80 having a tangential extension corresponding to 1½-2 times the diameter/maximum extension (in the radial direction) of a displacement member 60. Thereby, each of the first cavities have a flat bottom or inner surface portion 81. In at least one end of each of the first cavities 80, a gently sloping ledge 82 is formed, providing a gradual transition from the flat bottom or inner surface portion 81 to the radially outer surface 151 of the ring-shaped crank flange 150 of the crank arm disc 41. Since the first cavities 80 have an elongate shape, a relative rotation between the crank arm disc 41 and the drive disc 50 is allowed until the displacement members 60 come into contact with the gently sloping ledge 82.

As also described above, it has been realized, as shown in Figs. 9-14, that the first cavities 80 may simply be formed as an indentation in the surface 152 having e.g. a part cylindrical shape corresponding in shape with an outer surface of the displacement members 60. Thus, the dimension of the part cylindrically shaped indentations/first cavities 80 may have a radius identical or slightly larger than a radius of the displacement members 60.

In either case the first cavities 80 are spaced apart in the surface 152, whereby inter-cavity surface portions 48 are formed adjacent to and between the first cavities 80. The inter-cavity surface portions 48 or the transition between the first cavity and the inter-cavity surface portions 48 is sufficient to push a displacement member 60 out of the first cavity 80.

In the Figs. 9-14 embodiments, the first cavities are - as described formed in the radially inwardly facing surface of the crank flange 150 of the crank arm disc 41.

Thereby, when the forward rotation 110 of the crank arm 40 commences, the displacement members 60 are pushed out of the first cavities 80 by the gently sloping ledge 82, in a radially inward direction, and towards the second cavities 90 formed in the radially outwardly facing surface 57 of the drive flange 56 of the drive disc 50. The torque in the crank arm 40 is sensed by a sensor 160 located e.g. on the crank arm 40 as shown in Fig. 2 or otherwise as suggested above, e.g. in connection with the drive shaft 20. The sensor 160 activates the electric motor 10. The displacement members thus being forced into engagement with the second cavities, thus brings the drive disc 50 (and thereby the electric motor 10) and the sprocket member 31 (and thereby the sprocket 30 and chain 106er) into engagement with each other, allowing the electrical motor 10 to transfer momentum/power to the rear sprocket 107 and thereby the rear wheel 103, whereby the forward motion of the bicycle is aided.

Although the bearings 70, and the first and second cavities 80, 90 are distributed differently in this embodiment (Figs. 9-14 embodiment), relative to the embodiment shown in Figs. 6-8, the arrow 111 in Fig. 8A may illustrate this by the showing the rotation of the sprocket 30 in forward direction.

As the forward trot/forward pedaling 110 is continued by the bicyclist/user, a situation similar to the situation/stage/step shown in Fig. 8B will occur, even though the bearings 70, and the first and second cavities 80, 90 are distributed differently in this embodiment (Figs. 9-14 embodiment) relative to the embodiment shown in Figs. 6-8.

As can be seen in Fig. 8B, the forward trot in the pedals 105 has caused the crank arm disc 41 to be rotated forward relative to the sprocket member 31. The above-mentioned protrusions/studs/knobs 140 have moved in the slits/grooves/channels 141 to an extreme end thereof. Thereby, a surface portion 48 of the radially outer surface 151 of the crank arm disc 41 adjacent to the first cavity 80 covers or is aligned with the bearing 70 and aids in maintaining the displacement member 60 in engagement with the second cavity 90 in sprocket member 31. This is the same for the Figs. 9-14 embodiment. However, in the Figs. 9-14 embodiment, the surface portion 48 adjacent to and between the first cavity 80 are located on the radially inwardly facing surface 152 of the ring shaped crank flange 150 (and not on the radially outer surface 151 as in the Figs. 6-8 embodiment).

As long as the bicyclist/user maintains even a slight rotation in crank arm 40, the sensor or sensors 160 sense(s) the movement and maintains the drive of the electric motor 10.

A situation where the bicyclist/user stops pedaling or activates the coaster brake by a rearward trot, is shown in Fig. 8C. In Fig. 8C the rearward trot is indicated by the arrow 120, showing a rearwards rotation of the crank arm 40, i.e. a rotation opposite to the rotation indicated by the arrow 110 in Figs. 8A-B.

When the rearward rotation 120 of the crank arm 40 and thereby the crank arm disc 41 is commenced, or the pedaling is simply discontinued, a relative rotational movement between the sprocket member 31 and the crank arm disc 41 will occur, because the drive disc 50 will continue its' forward rotation. This will bring the protrusions/studs/knobs 140 out of engagement with the extreme end of the corresponding slits/grooves/channels 141, and in motion towards the opposite extreme end of the slits/grooves/channels 141. Thereby, in the Figs. 9-14 embodiment, also the surface portion 48 of the radially inner surface 152 of the crank arm disc 41 adjacent to and in between the first cavities 80, i.e. the surface portions forms inter-cavity surfaces, is rotated away from covering/out of alignment with the bearings of the drive disc (in the Figs. 6-8 embodiment the surface 48is located on the radially inner surface 151).

Therefore, the displacement members 60 are no longer forced into engagement with the second cavities 90. Rather, the inter-cavity surface 54 (see Figs. 14A-B) will push the displacement members out of engagement with the drive disc 50, and in a radial outward direction towards the first cavities 90 in the crank arm disc 41, where there is now room for them. This will bring the drive disc 50 and thereby the electric motor 10, out of engagement with the sprocket 30 and the drive of the chain 106 is thereby discontinued, when there is no pedaling or a backward pedaling (braking) 120.

When the sensor 160 senses that there is no longer any forward rotation of the crank arm 40, the electric motor 10 is turned off.

However, the disengagement of the drive disc 50 is instantaneous, due to the geometry and relative position of the first and second cavities, relative to the bearings 70 for the displacement members 60.

The arrangement of the one-way clutch 1 allows the quick disengagement of the drive between the drive disc 50 and the sprocket member 31, whereby - even with a delay in the response time from the sensor 160, the sensor senses the discontinued (or rearward) pedaling to the time the electric motor is turned of - the bicyclist/user will not experience a kick-back in the pedals 105.

Fig. 8C shows the situation where a rearward rotation 120 of the crank arm 40 has been induced by the user/bicyclist, in order to activate the coaster brake of the electrically powered bicycle 100. In Fig. 8C, the protrusions/studs/knobs 140 have been brought out of engagement with the forward extreme end of the corresponding slits/grooves/channels 141, as shown in Fig. 8B, and have been brought into contact with the opposite extreme back end of the slits/grooves/channels 141. This allows a transfer of force from the crank arm disc to the sprocket member 31 (with the drive disc 50 decoupled from the sprocket member 31). Thereby, the backward rotation 120 of the crank arm 40 is transferred to the sprocket member 31, the sprocket 30 and to the endless chain 106. This will cause an activation of the coaster brake mechanism of the rear wheel 103 hub. The arrow 121 in Fig. 8C. indicates the rearward rotation of the sprocket. Despite the difference in the distribution of the bearings 70 and the first and second cavities 80, 90 in the Figs. 9-14 embodiment, relative to the embodiment shown in Figs. 6-8, this will function in the same way.

Returning now to Fig. 11D, it will be appreciated that the ring-shaped sprocket flange 37 of the sprocket member 31 is arranged between, i.e. it is intermediary to, the radially inwardly arranged ring-shaped drive flange 56 on the drive disc 50 and a radially outwardly arranged ring-shape crank flange 150 of the crank arm disc 41. It can also be seen that the ring-shaped sprocket flange 37 has two opposed surfaces, radially inwardly facing surface/side 39 and radially outwardly facing surface 38. The radially inwardly facing surface/side 39 of the sprocket flange 37 opposes the outwardly facing side/surface 57 of the ring-shaped drive flange 56, with the second cavities 90, and the inter-cavity surfaces 54. The radially outwardly facing surface 38 of the sprocket flange 37 opposes the inwardly facing side/surface 152 of the ring-shaped crank flange 150 with the first cavities 80 and the inter-cavity surfaces 48 (or surface portions). In Fig. 11D, the displacement members 60 are shown to be in contact with the second cavities 90. Opposite to each of the second cavities, where there is a displacement member 60, there is located a surface portion 48/inter-cavity surface portion 48 of the inwardly facing side/surface 152 of the ring-shaped crank flange 150, whereby the drive disc 50 and thereby the motor is engaged.

From Fig. 11D it will also be appreciated that if the crank arm disc is rotated backwards, relative to the drive disc 50 (corresponding to stopping pedaling or braking), the sprocket member 31 and the crank arm disc 41 will also move relative to each other such that a first cavity will be located over the displacement members 60. Thereby, due to the movement of the drive disc 50, the inter-cavity surface 54 of the drive disc 50 will immediately push/press the displacement member out of engagement with the second cavities 90 and into the first cavities, whereby the drive disc 50 is disengaged from the sprocket member 31 and the crank arm disc 41. Since this happens immediately, kick-back is avoided.

Referring again to Figs. 10A-B, the figures also show a motor adaptor ring 50'. The motor adapter ring 50' has throughgoing apertures/openings 55' similar to the throughgoing apertures/openings 55 in the drive disc 50 for receiving the drive pins 11. The motor adaptor ring 50' therefore rotates with the drive disc 50. The motor adaptor ring further has a central throughgoing aperture 53''' corresponding to the central throughgoing aperture 53" of drive disc 50, allowing the motor adapter ring 50' to be mounted coaxially with the drive shaft 20, like the drive disc 50. The motor adapter ring 50' functions as a lid for the one way clutch 1 and allows for easier assembly and maintenance thereof.

Also shown in Figs. 10A-B is an outer bearing ring 160 arranged between the motor adapter ring 50' and the crank disc 41. The outer bearing ring is preferably arranged in a ring shaped depression in the axially outwardly facing surface 43 and encircling the central opening/aperture 45' in the crank disc 41.

Also shown in Figs. 10A-B is a middle gasket or bearing ring 162 arranged between the crank disc 41 and the sprocket member 31. The middle bearing ring 160 is sized to be located on the outside (radially) relative to the rings-shaped sprocket flange 37.

Also shown in Figs. 10A-B is an inner bearing ring 163 arranged between the sprocket member 31 and the drive disc 50.

Also shown in Figs. 10A-B is locking ring 164 arranged between drive disc 50 and a ring shaped locking flange 165 of the motor adaptor ring 50'. The ring shaped locking flange 165 has a diameter smaller than the diameter of the central throughgoing aperture 53" in the drive disc 50 (defined by the radially inner surface 53'. Thereby the ring shaped locking flange 165 may extend through the drive disc 50, and by securing the ring shaped locking flange 165 to the drive disc using the locking ring 50, the assembly may be releaseably locked.

Although the teachings of this invention have been described in detail for the purpose of illustration, it is understood that such detail is solely for that purpose, and variations can be made therein by those skilled in the art without departing from the scope of the teachings of this invention, which is defined in the claims.

The term "comprising" as used in the claims does not exclude other elements or steps. The term "a" or "an" as used in the claims does not exclude a plurality.

### List of reference numbers

A longitudinal axis of drive shaft
1 clutch/one-way clutch
10 electric motor/electric center motor
11 drive pins
20 drive shaft
30 sprocket
31 sprocket member
32 central throughgoing aperture in sprocket or sprocket member
33 inner side/surface (axially inwardly facing side/surface) of sprocket member
34 outer side/surface (axially outwardly facing side/surface) of sprocket member
35 radially outer (radially outwardly facing) surface of the sprocket member
36 radially inner (radially inwardly facing) surface of the sprocket member
37 ring shaped sprocket flange/sprocket flange
38 radially outer (radially outwardly facing) surface of ring-shaped sprocket flange
39 radially inner (radially inwardly facing) surface of ring-shaped sprocket flange
40 crank arm
41 crank arm disc/crank arm member
42 inner side/surface or axially inwardly facing side/surface of crank arm disc
43 outer side/surface or axially outwardly facing side/surface of crank arm disc
44 crank arm shaft
44' crank arm connection member
45 center bore/opening of crank arm
45' center bore/opening of crank arm disc
46 outer circumferential rim (radially outwardly facing rim/surface) of the crank arm disc
46' radially inwardly facing surface of the crank arm disc
47 hole for mounting a pedal
48 surface portion of crank arm disc adjacent to and between the first cavities
49 drive shaft connection member of the crank arm
50 drive disc/drive member
50' motor adapter ring/lid
51 first side/surface or axially outwardly facing side/surface of drive disc/drive member
52 second side/surface or axially inwardly facing side/surface of drive disc//drive member
53 circumferential rim of drive disc/drive member
53' radially inwardly facing side/surface of drive disc/drive member
53" central throughgoing aperture of the drive disc/drive member allowing the drive disc/drive member to be mounted coaxially with the drive shaft
53'" central throughgoing aperture of the motor adapter ring allowing the motor adapter ring to be mounted coaxially with the drive shaft
54 inter-cavity surface portion of the drive disc/drive member
55 apertures in the drive disc/drive member for receiving drive pins 55' apertures in the motor adapter/lid for receiving drive pins
56 ring-shaped flange on the drive disc/drive member
57 radially outer (radially outwardly facing) surface of the ring-shaped flange of the drive disc
58 radially inner (radially inwardly facing) surface of the ring-shaped flange of the drive disc
60 displacement member
70 first bearing/ bearing/ displacement member bearing
71 edge of the bearing
80 first cavity
81 flat portion of the inner surface of the first cavity
82 sloping portion of the inner surface of the first cavity of the crank arm disc
83 sharp ledge in first cavity 80 opposite to the sloping portion 82
90 second cavity
100 electrically powered bicycle
101 frame of electrically powered bicycle
102 front wheel of electrically powered bicycle
103 rear wheel of electrically powered bicycle
104 handle bar of electrically powered bicycle
105 pedals of electrically powered bicycle
106 endless chain of electrically powered bicycle
107 rear sprocket of electrically powered bicycle
109 drive output of electric center motor
110 arrow showing rotation of crank arm in forward direction
111 arrow showing rotation of the sprocket in forward direction (first direction)
112 arrow showing rotation of drive disc in forward direction (first direction)
113 saddle of electrically powered bicycle
114 seat post of electrically powered bicycle
115 rear luggage carrier of electrically powered bicycle
120 arrow showing rotation of crank arm in rearward direction (second direction)
121 arrow showing rotation of chain sprocket wheel in rearward direction (second direction)
130 force, F_{sprocket}, from the endless chain Z, influencing the sprocket
131 force, F_{crank}, induced by the rotation of the crank arm
132 component of force (F_{crank}) in a tangential direction, F_{crankT}
133 component of force (F_{crank}) in an axial direction, F_{crankA}
134 force applied by the crank arm disc on the displacement member in axial direction
135 force, F_{drive}, applied by the drive disc 50 on the displacement member 60
136 component, F_{driveA}, of force (F_{drive}) in the axial direction
137 component, F_{driveT}, of force (F_{drive}) in tangential direction.
140 protrusions/angle limitation protrusions
141 slits (elongate slits/grooves/channels)/ angle limitation slits
150 ring-shaped crank flange on crank arm disc
151 radially outer (radially outwardly facing) surface of ring-shaped crank flange
152 radially inner (radially inwardly facing) surface of ring-shaped crank flange
160 sensor
311 sprocket connection flanges/ radially extending flanges from the periphery/ of the radially outer (radially outwardly facing) surface of the sprocket member
312 throughgoing openings allowing connection of the sprocket member 31 to the sprocket
313 throughgoing connection openings 313 in the sprocket 30.

## Claims

1. A one-way clutch (1) for connecting and disconnecting an electric center motor (10) to and from a drive of an electrically powered bicycle (100) with a coaster brake, said drive comprising
- a drive shaft (20) having a longitudinal axis (A);
- a sprocket (30) arranged coaxially with the drive shaft (20);
- a crank arm (40) arranged on the drive shaft (20); and
- an endless chain (106) arranged over said sprocket (30),
wherein the one-way clutch (1) comprises
- a sprocket member (31) for transferring rotation from the one-way clutch (1) to the sprocket (30);
- a crank arm disc (41) for transferring rotation from said crank arm (40) to said sprocket (30);
- a drive disc (50) for transferring rotation from the electric center motor (10) to said sprocket (30), said drive disc (50) being rotatable relative to the crank arm disc (41) and said sprocket member (31);
- at least one displacement member (60) journaled in a bearing (70) through a portion of the sprocket member (31);
- at least one first cavity (80) formed as an indentation in a surface (42, 152) of a portion (150) of said crank arm disc (41), and configured to receive and engage a first portion of said displacement member (60);
- first inter-cavity surface portions (48) formed adjacent to and between the first cavities (80);
- a plurality of second cavities (90) formed as indentations in a surface (57) of a portion 56 of the drive disc (50), and configured to receive and engage a second portion of said displacement member (60); and
- second inter-cavity surface portions (48) formed adjacent to and between the second cavities (90),
wherein said at least one displacement member (60) is linearly slideably relative to said bearing (70) between
- a first position, where a first portion of the displacement member (60) is received in and engages a first cavity (80), and where the displacement member (60) is disengaged from any of the second cavities (90); and
- a second position, where a second portion of the displacement member (60) is received in and engages a second cavity (90), and where the displacement member (60) is disengaged from the first cavity (80), and
wherein a forward rotation (110) of said crank arm disc (41) relative to said sprocket member (31) pushes the at least one displacement member out of said at least one first cavity (80) and into engagement with a second cavity (90), where it is kept in place by the a first inter-cavity surface portion (48) while the forward rotation of the crank arm disc (41) is maintained, and where a backwards rotation (120) of the crank arm disc (41) displaces the at least first cavity (80) into alignment with a bearing (70), a second inter-cavity portion (54) pushes the at least one the displacement member (60) into said first cavity (80).

2. The one-way clutch (1) according to claim 1, wherein said first cavity (80) is shaped such that the displacement member (60) is forced out of engagement with said first cavity (80) and toward engagement with said second cavity (90) when said crank arm (40) is rotated in a first direction, and wherein the second cavity (90) is shaped such that the displacement member (60) is forced out of engagement with said second cavity (90) and toward engagement with said first cavity (80) when said crank arm (40) is rotated in a second direction opposite to said first direction.

3. The one-way clutch (1) according to claim 2, wherein the at least one displacement member (60) is displaceable from said at least one first cavity (80) by a ledge (82), forming a transition from a straight bottom surface portion (81) of said at least one first cavity (80) and a surface (48, 151) of said crank arm disc (41) in which the at least one first cavity (80) is formed.

4. The one-way clutch (1) according to any one of the preceding claims, wherein said crank arm disc (41) is rotatable relative to said sprocket member (31) in a limited angle only.

5. The one-way clutch (1) according to claim 4 wherein said limited rotation is provided by at least one protrusion (140) on one of the sprocket members (31) or the crank arm disc (41), said at least one protrusion being configured for cooperating with at least one slit (141) provided in the other of the sprocket member (31) or the crank arm disc (41).

6. The one-way clutch (1) according to any one of the preceding claims, wherein said sprocket member (31), said crank arm disc (41), said drive disc (50), and said displacement member (60) forms an exchangeable entity, where said sprocket member (31) comprises means for rotation-fast connection to said sprocket (30), where said crank arm disc (41) comprises means for rotation-fast connection to said crank arm 40, and wherein said drive disc (50) comprises means for connecting to a drive output (109) of said electric center motor (10).

7. The one-way clutch (1) according to any one of the preceding claims, wherein said displacement member (60) is slideable in an axial direction parallel to said axis (A) of the drive shaft (20).

8. The one-way clutch (1) according to claim 7, wherein said at least one bearing (70) is formed through said sprocket member (31), where at least one first cavity (80) is formed in an axially inwardly facing surface (42) of the crank arm disc (41), and where said second cavities (90) are formed in an axially outwardly facing surface (51) of the drive disc (50).

9. The one-way clutch (1) according to any one of the claims 1-6, wherein said displacement member (60) is slideable in an radial direction perpendicular to said axis (A) of the drive shaft (20).

10. The one-way clutch (1) according to claim 9, wherein the at least one first cavity (80) is formed in a radially inwardly facing surface (152) of a ring-shaped crank flange (150) of the crank arm member (41), and where said plurality of second cavities (90) is formed in an radially outwardly facing surface (57) of said drive disc (50).

11. The one-way clutch (1) according to any one of the preceding claims, wherein there is one first cavity (80) for every one displacement member (60) and every one bearing (70).

12. An electrically powered bicycle (100) with a coaster brake, and a one-way clutch (1) according to claim 1.

13. The electrically powered bicycle (100) according to claim 12, wherein a sensor (160) is arranged in connection with the drive of the electrically powered bicycle (100), and wherein said sensor (160) is configured for turning on the electric center motor (10) when a forward rotation (110) of the crank arm (40) is detected by the sensor, and for turning off the electric center motor (10) when no rotation or a backwards rotation (120) of the crank arm (40) is detected by the sensor.

14. A method of connecting and disconnecting an electric center motor (10) to and from engagement with a drive of an electrically powered bicycle (100) with a coaster brake, by a one-way clutch (1), said drive comprising
- a drive shaft (20) having a longitudinal axis (A);
- a sprocket (30) arranged coaxially with the drive shaft (20);
- a crank arm (40) arranged on the drive shaft (20); and
- an endless chain (106) arranged over said sprocket (30),
wherein the one-way clutch (1) comprises
- a sprocket member (31) for transferring rotation from the one-way clutch (1) to the sprocket (30);
- a crank arm disc (41) for transferring rotation from said crank arm (40) to said sprocket (30);
- a drive disc (50) for transferring rotation from the electric center motor (10) to said sprocket (30), said drive disc (50) being rotatable relative to the crank arm disc (41) and said sprocket member (31);
- at least one displacement member (60) journaled in a bearing (70) through a portion of the sprocket member (31);
- at least one first cavity (80) formed as an indentation in a surface (42, 152) of a portion(150) of said crank arm disc (41), and configured to receive and engage a first portion of said displacement member (60);
- first inter-cavity surface portions (48) formed adjacent to and between the first cavities (80);
- a plurality of second cavities (90) formed as indentations in a surface (57) of a portion (56) the drive disc (50), and configured to receive and engage a second portion of said displacement member (60); and
- second inter-cavity surface portions (48) formed adjacent to and between the second cavities (90),
wherein said method comprises linearly sliding said at least one displacement member (60) relative to said bearing (70), between
- a first position, where a first portion of the displacement member (60) is received in and engages a first cavity (80), and where the displacement member (60) is disengaged from any one of the second cavities (90) to disconnect the electric motor (10) from the drive; and
- a second position, where a second portion of the displacement member (60) is received in and engages one of said second cavities (90), and where the displacement member (60) is disengaged from the first cavity (80) to connect the electric center motor (10) to the drive, and
wherein a forward rotation (110) of said crank arm disc (41) relative to said sprocket member (31) pushes the at least one displacement member out of said at least one first cavity (80) and into engagement with a second cavity (90), where it is kept in place by the a first inter-cavity surface portion (48) while the forward rotation of the crank arm disc (41) is maintained, and where a backwards rotation (120) of the crank arm disc (41) displaces the at least first cavity (80) into alignment with a bearing (70), a second inter-cavity portion (54) pushes the at least one the displacement member (60) into said first cavity (80).

## Patentansprüche

1. Einwegkupplung (1) zum Verbinden und Trennen eines elektrischen Zentralmotors (10) mit und von einem Antrieb eines elektrisch angetriebenen Fahrrads (100) mit einer Rücktrittbremse, wobei der Antrieb Folgendes umfasst:
- eine Antriebswelle (20), die eine Längsachse (A) aufweist;
- ein Kettenrad (30), das koaxial zu der Antriebswelle (20) angeordnet ist;
- einen Kurbelarm (40), der an der Antriebswelle (20) angeordnet ist; und
- eine Endloskette (106), die über dem Kettenrad (30) angeordnet ist,
wobei die Einwegkupplung (1) Folgendes umfasst:
- ein Kettenradelement (31) zum Übertragen von Drehung von der Einwegkupplung (1) auf das Kettenrad (30);
- eine Kurbelarmscheibe (41) zum Übertragen von Drehung von dem Kurbelarm (40) auf das Kettenrad (30);
- eine Antriebsscheibe (50) zum Übertragen von Drehung von dem elektrischen Zentralmotor (10) auf das Kettenrad (30), wobei die Antriebsscheibe (50) relativ zu der Kurbelarmscheibe (41) und dem Kettenradelement (31) drehbar ist;
- zumindest ein Verschiebungselement (60), das durch einen Abschnitt des Kettenradelements (31) in einem Lager (70) gelagert ist;
- zumindest einen ersten Hohlraum (80), der als eine Vertiefung in einer Fläche (42, 152) eines Abschnittes (150) der Kurbelarmscheibe (41) gebildet ist und konfiguriert ist, um einen ersten Abschnitt des Verschiebungselements (60) aufzunehmen und in Eingriff zu nehmen;
- erste Zwischenhohlraumflächenabschnitte (48), die benachbart zu und zwischen den ersten Hohlräumen (80) gebildet sind;
- eine Vielzahl von zweiten Hohlräumen (90), die als Vertiefungen in einer Fläche (57) eines Abschnittes 56 der Antriebsscheibe (50) gebildet ist und konfiguriert ist, um einen zweiten Abschnitt des Verschiebungselements (60) aufzunehmen und in Eingriff zu nehmen; und
- zweite Zwischenhohlraumflächenabschnitte (48), die benachbart zu und zwischen den zweiten Hohlräumen (90) gebildet sind,
wobei das zumindest eine Verschiebungselement (60) relativ zu dem Lager (70) linear verschiebbar ist zwischen
- einer ersten Position, in der ein erster Abschnitt des Verschiebungselements (60) in einem ersten Hohlraum (80) aufgenommen ist und diesen in Eingriff nimmt, und in der das Verschiebungselement (60) von beliebigen der zweiten Hohlräume (90) gelöst ist; und
- einer zweiten Position, in der ein zweiter Abschnitt des Verschiebungselements (60) in einem zweiten Hohlraum (90) aufgenommen ist und diesen in Eingriff nimmt, und in der das Verschiebungselement (60) von dem ersten Hohlraum (80) gelöst ist, und
wobei eine Vorwärtsdrehung (110) der Kurbelarmscheibe (41) relativ zu dem Kettenradelement (31) das zumindest eine Verschiebungselement aus dem zumindest einen ersten Hohlraum (80) und in Eingriff mit einem zweiten Hohlraum (90) drückt, in dem es durch den ersten Zwischenhohlraumflächenabschnitt (48) an Ort und Stelle gehalten wird, während die Vorwärtsdrehung der Kurbelarmscheibe (41) beibehalten wird, und wobei eine Rückwärtsdrehung (120) der Kurbelarmscheibe (41) den zumindest ersten Hohlraum (80) in Ausrichtung mit einem Lager (70) verschiebt, wobei ein zweiter Zwischenhohlraumabschnitt (54) das zumindest eine Verschiebungselement (60) in den ersten Hohlraum (80) drückt.

2. Einwegkupplung (1) nach Anspruch 1, wobei der erste Hohlraum (80) derart geformt ist, dass das Verschiebungselement (60) aus Eingriff mit dem ersten Hohlraum (80) und in Richtung Eingriff mit dem zweiten Hohlraum (90) gedrängt wird, wenn der Kurbelarm (40) in einer ersten Richtung gedreht wird, und wobei der zweite Hohlraum (90) derart geformt ist, dass das Verschiebungselement (60) aus Eingriff mit dem zweiten Hohlraum (90) und in Richtung Eingriff mit dem ersten Hohlraum (80) gedrängt wird, wenn der Kurbelarm (40) in einer zweiten Richtung entgegengesetzt zu der ersten Richtung gedreht wird.

3. Einwegkupplung (1) nach Anspruch 2, wobei das zumindest eine Verschiebungselement (60) durch eine Leiste (82) aus dem zumindest einen ersten Hohlraum (80) verschiebbar ist, wodurch ein Übergang von einem geraden unteren Flächenabschnitt (81) des zumindest einen ersten Hohlraums (80) und einer Fläche (48, 151) der Kurbelarmscheibe (41) gebildet wird, in der der zumindest eine erste Hohlraum (80) gebildet wird.

4. Einwegkupplung (1) nach einem der vorhergehenden Ansprüche, wobei die Kurbelarmscheibe (41) relativ zu dem Kettenradelement (31) nur in einem begrenzten Winkel drehbar ist.

5. Einwegkupplung (1) nach Anspruch 4, wobei die begrenzte Drehung durch zumindest einen Vorsprung (140) an einem von den Kettenradelementen (31) oder der Kurbelarmscheibe (41) bereitgestellt wird, wobei der zumindest eine Vorsprung konfiguriert ist, um mit zumindest einem Schlitz (141) zu kooperieren, der in dem anderen von dem Kettenradelement (31) oder der Kurbelarmscheibe (41) bereitgestellt ist.

6. Einwegkupplung (1) nach einem der vorhergehenden Ansprüche, wobei das Kettenradelement (31), die Kurbelarmscheibe (41), die Antriebsscheibe (50) und das Verschiebungselement (60) eine austauschbare Einheit bilden, wobei das Kettenradelement (31) Mittel zur drehschnellen Verbindung mit dem Kettenrad (30) umfasst, wobei die Kurbelarmscheibe (41) Mittel zur drehschnellen Verbindung mit dem Kurbelarm 40 umfasst, und wobei die Antriebsscheibe (50) Mittel zur Verbindung mit einer Antriebsausgabe (109) des elektrischen Zentralmotors (10) umfasst.

7. Einwegkupplung (1) nach einem der vorhergehenden Ansprüche, wobei das Verschiebungselement (60) in einer axialen Richtung parallel zu der Achse (A) der Antriebswelle (20) verschiebbar ist.

8. Einwegkupplung (1) nach Anspruch 7, wobei das zumindest eine Lager (70) durch das Kettenradelement (31) gebildet ist, wobei zumindest ein erster Hohlraum (80) in einer axial einwärts gerichteten Fläche (42) der Kurbelarmscheibe (41) gebildet ist, und wobei die zweiten Hohlräume (90) in einer axial auswärts gerichteten Fläche (51) der Antriebsscheibe (50) gebildet sind.

9. Einwegkupplung (1) nach einem der Ansprüche 1-6, wobei das Verschiebungselement (60) in einer radialen Richtung senkrecht zu der Achse (A) der Antriebswelle (20) verschiebbar ist.

10. Einwegkupplung (1) nach Anspruch 9, wobei der zumindest eine erste Hohlraum (80) in einer radial einwärts gerichteten Fläche (152) eines ringförmigen Kurbelflansches (150) des Kurbelarmelements (41) gebildet ist, und wobei die Vielzahl von zweiten Hohlräumen (90) in einer radial auswärts gerichteten Fläche (57) der Antriebsscheibe (50) gebildet ist.

11. Einwegkupplung (1) nach einem der vorhergehenden Ansprüche, wobei es einen ersten Hohlraum (80) für jedes Verschiebungselement (60) und jedes Lager (70) gibt.

12. Elektrisch angetriebenes Fahrrad (100) mit einer Rücktrittbremse und einer Einwegkupplung (1) nach Anspruch 1.

13. Elektrisch angetriebenes Fahrrad (100) nach Anspruch 12, wobei ein Sensor (160) in Verbindung mit dem Antrieb des elektrisch angetriebenen Fahrrads (100) angeordnet ist, und wobei der Sensor (160) konfiguriert ist, um den elektrischen Zentralmotor (10) einzuschalten, wenn durch den Sensor eine Vorwärtsdrehung (110) des Kurbelarms (40) erfasst wird, und um den elektrischen Zentralmotor (10) auszuschalten, wenn durch den Sensor keine Drehung oder eine Rückwärtsdrehung (120) des Kurbelarms (40) erfasst wird.

14. Verfahren zum Verbinden und Trennen eines elektrischen Zentralmotors (10) mit und von Eingriff mit einem Antrieb eines elektrisch angetriebenen Fahrrads (100) mit einer Rücktrittbremse, durch eine Einwegkupplung (1), wobei der Antrieb Folgendes umfasst:
- eine Antriebswelle (20), die eine Längsachse (A) aufweist;
- ein Kettenrad (30), das koaxial zu der Antriebswelle (20) angeordnet ist;
- einen Kurbelarm (40), der an der Antriebswelle (20) angeordnet ist; und
- eine Endloskette (106), die über dem Kettenrad (30) angeordnet ist,
wobei die Einwegkupplung (1) Folgendes umfasst:
- ein Kettenradelement (31) zum Übertragen von Drehung von der Einwegkupplung (1) auf das Kettenrad (30);
- eine Kurbelarmscheibe (41) zum Übertragen von Drehung von dem Kurbelarm (40) auf das Kettenrad (30);
- eine Antriebsscheibe (50) zum Übertragen von Drehung von dem elektrischen Zentralmotor (10) auf das Kettenrad (30), wobei die Antriebsscheibe (50) relativ zu der Kurbelarmscheibe (41) und dem Kettenradelement (31) drehbar ist;
- zumindest ein Verschiebungselement (60), das durch einen Abschnitt des Kettenradelements (31) in einem Lager (70) gelagert ist;
- zumindest einen ersten Hohlraum (80), der als eine Vertiefung in einer Fläche (42, 152) eines Abschnittes (150) der Kurbelarmscheibe (41) gebildet ist und konfiguriert ist, um einen ersten Abschnitt des Verschiebungselements (60) aufzunehmen und in Eingriff zu nehmen;
- erste Zwischenhohlraumflächenabschnitte (48), die benachbart zu und zwischen den ersten Hohlräumen (80) gebildet sind;
- eine Vielzahl von zweiten Hohlräumen (90), die als Vertiefungen in einer Fläche (57) eines Abschnittes (56) der Antriebsscheibe (50) gebildet ist und konfiguriert ist, um einen zweiten Abschnitt des Verschiebungselements (60) aufzunehmen und in Eingriff zu nehmen; und
- zweite Zwischenhohlraumflächenabschnitte (48), die benachbart zu und zwischen den zweiten Hohlräumen (90) gebildet sind,
wobei das Verfahren das lineare Verschieben des zumindest einen Verschiebungselements (60) relativ zu dem Lager (70) zwischen
- einer ersten Position, in der ein erster Abschnitt des Verschiebungselements (60) in einem ersten Hohlraum (80) aufgenommen ist und diesen in Eingriff nimmt, und in der das Verschiebungselement (60) von beliebigen der zweiten Hohlräume (90) gelöst ist, um den elektrischen Motor (10) von dem Antrieb zu trennen; und
- einer zweiten Position umfasst, in der ein zweiter Abschnitt des Verschiebungselements (60) in einem der zweiten Hohlräume (90) aufgenommen ist und diesen in Eingriff nimmt, und in der das Verschiebungselement (60) von dem ersten Hohlraum (80) gelöst ist, um den elektrischen Zentralmotor (10) mit dem Antrieb zu verbinden, und
wobei eine Vorwärtsdrehung (110) der Kurbelarmscheibe (41) relativ zu dem Kettenradelement (31) das zumindest eine Verschiebungselement aus dem zumindest einen ersten Hohlraum (80) und in Eingriff mit einem zweiten Hohlraum (90) drückt, in dem es durch den ersten Zwischenhohlraumflächenabschnitt (48) an Ort und Stelle gehalten wird, während die Vorwärtsdrehung der Kurbelarmscheibe (41) beibehalten wird, und wobei eine Rückwärtsdrehung (120) der Kurbelarmscheibe (41) den zumindest ersten Hohlraum (80) in Ausrichtung mit einem Lager (70) verschiebt, wobei ein zweiter Zwischenhohlraumabschnitt (54) das zumindest eine Verschiebungselement (60) in den ersten Hohlraum (80) drückt.

## Revendications

1. Embrayage unidirectionnel (1) pour raccorder et séparer un moteur central électrique (10) à et d'un entraînement d'une bicyclette électrique (100) avec un frein de montée, ledit entraînement comprenant :
- un arbre d'entraînement (20) ayant un axe longitudinal (A) ;
- un pignon (30) disposé coaxialement avec l'arbre d'entraînement (20) ;
- un bras de manivelle (40) disposé sur l'arbre d'entraînement (20) ; et
- une chaîne sans fin (106) disposée sur ledit pignon (30),
dans lequel l'embrayage unidirectionnel (1) comprend :
- un élément de pignon (31) pour transférer la rotation de l'embrayage unidirectionnel (1) au pignon (30) ;
- un disque de bras de manivelle (41) pour transférer la rotation dudit bras de manivelle (40) audit pignon (30) ;
- un disque d'entraînement (50) pour transférer la rotation du moteur central électrique (10) audit pignon (30), ledit disque d'entraînement (50) pouvant tourner par rapport au disque de bras de manivelle (41) et audit élément de pignon (31) ;
- au moins un élément de déplacement (60) logé dans un palier (70) à travers une partie de l'élément de pignon (31) ;
- au moins une première cavité (80) formée sous la forme d'une indentation dans une surface (42, 152) d'une partie (150) dudit disque de bras de manivelle (41), et configurée pour recevoir et venir en prise avec une première partie dudit élément de déplacement (60) ;
- des premières parties de surface inter-cavité (48) formées de manière adjacente au niveau des premières cavités (80) et entre celles-ci ;
- une pluralité de secondes cavités (90) formées en tant qu'indentations dans une surface (57) d'une partie 56 du disque d'entraînement (50), et configurées pour recevoir et venir en prise avec une seconde partie dudit élément de déplacement (60) ; et
- des secondes parties de surface inter-cavité (48) formées de manière adjacente au niveau des secondes cavités (90) et entre celles-ci (90),dans lequel ledit au moins un élément de déplacement (60) est à coulissement linéaire par rapport audit palier (70) entre :
- une première position, dans laquelle une première partie de l'élément de déplacement (60) est reçue dans une première cavité (80) et vient en prise avec celle-ci, et dans laquelle l'élément de déplacement (60) est libéré de l'une quelconque des secondes cavités (90) ; et
- une seconde position, dans laquelle une seconde partie de l'élément de déplacement (60) est reçue dans une seconde cavité (90) et vient en prise avec celle-ci, et dans laquelle l'élément de déplacement (60) est libéré de la première cavité (80), et
dans lequel une rotation vers l'avant (110) dudit disque de bras de manivelle (41) par rapport audit élément de pignon (31) pousse l'au moins un élément de déplacement en dehors de ladite au moins une première cavité (80) et en prise avec une seconde cavité (90), dans lequel il est maintenu en place par une première partie de surface inter-cavité (48) tandis que la rotation vers l'avant du disque de bras de manivelle (41) est maintenue, et dans lequel une rotation vers l'arrière (120) du disque de bras de manivelle (41) déplace l'au moins une première cavité (80) en alignement avec un palier (70), une seconde partie inter-cavité (54) pousse l'au moins un élément de déplacement (60) dans ladite première cavité (80).

2. Embrayage unidirectionnel (1) selon la revendication 1, dans lequel ladite première cavité (80) est formée de sorte que l'élément de déplacement (60) est dégagé de sa mise en prise avec ladite première cavité (80) et poussé vers une mise en prise avec ladite seconde cavité (90) lorsque ledit bras de manivelle (40) tourne dans une première direction, et dans lequel la seconde cavité (90) est formée de sorte que l'élément de déplacement (60) est dégagé de sa mise en prise avec ladite seconde cavité (90) et poussé vers une mise en prise avec ladite première cavité (80) lorsque ledit bras de manivelle (40) tourne dans une seconde direction opposée à ladite première direction.

3. Embrayage unidirectionnel (1) selon la revendication 2, dans lequel l'au moins un élément de déplacement (60) peut être déplacé de ladite au moins une première cavité (80) par un rebord (82), formant une transition depuis une partie de surface inférieure droite (81) de ladite au moins une première cavité (80) et une surface (48, 151) dudit disque de bras de manivelle (41) dans laquelle l'au moins une première cavité (80) est formée.

4. Embrayage unidirectionnel (1) selon l'une quelconque des revendications précédentes, dans lequel ledit disque de bras de manivelle (41) peut tourner par rapport audit élément de pignon (31) selon un angle limité uniquement.

5. Embrayage unidirectionnel (1) selon la revendication 4, dans lequel ladite rotation limitée est fournie par au moins une saillie (140) sur l'un des éléments de pignon (31) ou du disque de bras de manivelle (41), ladite au moins une saillie étant configurée pour coopérer avec au moins une fente (141) fournie dans l'autre de l'élément de pignon (31) ou du disque de bras de manivelle (41).

6. Embrayage unidirectionnel (1) selon l'une quelconque des revendications précédentes, dans lequel ledit élément de pignon (31), ledit disque de bras de manivelle (41), ledit disque d'entraînement (50) et ledit élément de déplacement (60) forment une entité interchangeable, dans lequel ledit élément de pignon (31) comprend un moyen pour un raccordement rapide en rotation audit pignon (30), dans lequel ledit disque de bras de manivelle (41) comprend un moyen pour un raccordement rapide en rotation audit bras de manivelle 40, et dans lequel ledit disque d'entraînement (50) comprend un moyen de raccordement à une sortie de commande (109) dudit moteur central électrique (10).

7. Embrayage unidirectionnel (1) selon l'une quelconque des revendications précédentes, dans lequel ledit élément de déplacement (60) peut coulisser dans une direction axiale parallèle audit axe (A) de l'arbre d'entraînement (20).

8. Embrayage unidirectionnel (1) selon la revendication 7, dans lequel ledit au moins un palier (70) est formé à travers ledit élément de pignon (31), dans lequel au moins une première cavité (80) est formée dans une surface (42) orientée axialement vers l'intérieur du disque de bras de manivelle (41), et dans lequel lesdites secondes cavités (90) sont formées dans une surface orientée axialement vers l'extérieur (51) du disque d'entraînement (50).

9. Embrayage unidirectionnel (1) selon l'une quelconque des revendications 1 à 6, dans lequel ledit élément de déplacement (60) peut coulisser dans une direction radiale perpendiculaire audit axe (A) de l'arbre d'entraînement (20).

10. Embrayage unidirectionnel (1) selon la revendication 9, dans lequel l'au moins une première cavité (80) est formée dans une surface orientée radialement vers l'intérieur (152) d'un rebord de manivelle en forme de bague (150) de l'élément de bras de manivelle (41), et dans lequel ladite pluralité de secondes cavités (90) est formée dans une surface orientée radialement vers l'extérieur (57) dudit disque d'entraînement (50).

11. Embrayage unidirectionnel (1) selon l'une quelconque des revendications précédentes, dans lequel il y a une première cavité (80) pour tout élément de déplacement (60) et tout palier (70) .

12. Bicyclette électrique (100) avec frein de montée, et embrayage unidirectionnel (1) selon la revendication 1.

13. Bicyclette électrique (100) selon la revendication 12, dans laquelle un capteur (160) est agencé en relation avec l'entraînement de la bicyclette électrique (100), et dans laquelle ledit capteur (160) est configuré pour allumer le moteur central électrique (10) lorsqu'une rotation vers l'avant (110) du bras de manivelle (40) est détectée par le capteur, et pour éteindre le moteur central électrique (10) lorsqu'aucune rotation ou rotation vers l'arrière (120) du bras de manivelle (40) n'est détectée par le capteur.

14. Procédé de raccordement et de séparation d'un moteur central électrique (10) à et d'une mise en prise avec un entraînement d'une bicyclette électrique (100) avec un frein de montée, par un embrayage unidirectionnel (1), ledit entraînement comprenant :
- un arbre d'entraînement (20) ayant un axe longitudinal (A) ;
- un pignon (30) disposé coaxialement avec l'arbre d'entraînement (20) ;
- un bras de manivelle (40) disposé sur l'arbre d'entraînement (20) ; et
- une chaîne sans fin (106) disposée sur ledit pignon (30), dans lequel l'embrayage unidirectionnel (1) comprend
- un élément de pignon (31) pour transférer la rotation de l'embrayage unidirectionnel (1) au pignon (30) ;
- un disque de bras de manivelle (41) pour transférer la rotation dudit bras de manivelle (40) audit pignon (30) ;
- un disque d'entraînement (50) pour transférer la rotation du moteur central électrique (10) audit pignon (30), ledit disque d'entraînement (50) pouvant tourner par rapport au disque de bras de manivelle (41) et audit élément de pignon (31) ;
- au moins un élément de déplacement (60) logé dans un palier (70) à travers une partie de l'élément de pignon (31) ;
- au moins une première cavité (80) formée sous la forme d'une indentation dans une surface (42, 152) d'une partie (150) dudit disque de bras de manivelle (41), et configurée pour recevoir et venir en prise avec une première partie dudit élément de déplacement (60) ;
- des premières parties de surface inter-cavité (48) formées de manière adjacente au niveau des premières cavités (80) et entre celles-ci ;
- une pluralité de secondes cavités (90) formées en tant qu'indentations dans une surface (57) d'une partie (56) du disque d'entraînement (50), et configurées pour recevoir et venir en prise avec une seconde partie dudit élément de déplacement (60) ; et
- des secondes parties de surface inter-cavité (48) formées de manière adjacente au niveau des secondes cavités (90) et entre celles-ci, dans lequel ledit procédé comprend un coulissement linéaire dudit au moins un élément de déplacement (60) par rapport audit palier (70), entre
- une première position, dans laquelle une première partie de l'élément de déplacement (60) est reçue dans une première cavité (80) et vient en prise avec celle-ci, et dans laquelle l'élément de déplacement (60) est libéré de l'une quelconque des secondes cavités (90) pour séparer le moteur électrique (10) de l'entraînement ; et
- u ne seconde position, dans laquelle une seconde partie de l'élément de déplacement (60) est reçue dans l'une desdites secondes cavités (90) et vient en prise avec celles-ci, et dans laquelle l'élément de déplacement (60) est libéré de la première cavité (80) pour raccorder le moteur central électrique (10) à l'entraînement, et
dans lequel une rotation vers l'avant (110) dudit disque de bras de manivelle (41) par rapport audit élément de pignon (31) pousse l'au moins un élément de déplacement en dehors de ladite au moins une première cavité (80) et en prise avec une seconde cavité (90), dans lequel il est maintenu en place par l'une première partie de surface inter-cavité (48) tandis que la rotation vers l'avant du disque de bras de manivelle (41) est maintenue, et dans lequel une rotation vers l'arrière (120) du disque de bras de manivelle (41) déplace l'au moins une première cavité (80) en alignement avec un palier (70), une seconde partie inter-cavité (54) pousse l'au moins un élément de déplacement (60) dans ladite première cavité (80).
